# EUROPEAN PATENT SPECIFICATION

(11) **EP 4 328 861 B1**
(45) Date of publication and mention of the grant of the patent: **28.10.2026**
(21) Application number: 23192143.8
(22) Date of filing: 18.08.2023
(51) Int. Cl.: G06T 13/20

(54) **JAW MOVEMENTS DATA GENERATION APPARATUS, DATA GENERATION METHOD, AND DATA GENERATION PROGRAM**
GERÄT, VERFAHREN UND PROGRAMM ZUR ERZEUGUNG VON KIEFERBEWEGUNGSDATEN
APPAREIL DE GÉNÉRATION DE DONNÉES DE MOUVEMENTS DE MÂCHOIRES, MÉTHODE DE GÉNÉRATION DE DONNÉES ET PROGRAMME DE GÉNÉRATION DE DONNÉES

(30) Priority: 22.08.2022 JP 2022131606
(43) Date of publication of application: 28.02.2024
(73) Proprietor: J. Morita MFG. Corp., Kyoto-shi, Kyoto 612-8533 (JP)
(72) Inventor: YOSHIKAWA, Hideki, Kyoto, 612-8533 (JP); NISHIMURA, Yuu, Kyoto, 612-8533 (JP)
(74) Representative: Müller Hoffmann & Partner

(56) References cited:
- WO-A1-2021/116672
- US-A1- 2019 147 591
- US-A1- 2020 383 752
- YANG WENWU ET AL: "Building anatomically realistic jaw kinematics model from data", VISUAL COMPUTER, SPRINGER, BERLIN, DE, vol. 35, no. 6, 15 May 2019 (2019-05-15), pages 1105 - 1118, XP036800804, ISSN: 0178-2789, [retrieved on 20190515], DOI: 10.1007/S00371-019-01677-8

## Description

### BACKGROUND OF THE INVENTION

### Field of the Invention

The present disclosure relates to a data generation apparatus, a data generation method, and a data generation program that generate jaw movement-related data related to a jaw movement of a subject.

### Description of the Background Art

In a conventional technique, a jaw movement may be observed to check occlusion for a patient with a symptom such as pain in the temporomandibular joint or a patient with a chief complaint of malocclusion. Also, it is necessary to observe a jaw movement of a patient to check occlusion in orthodontic treatment or in creating a false tooth or a prosthesis. The jaw movement can be checked using a gypsum cast reproducing the shape of the teeth row of the patient and an articulator. Also, the jaw movement of the patient can be checked based on the operation of a jig fitted to the patient to measure the positional relationship between the upper and lower jaws and movement data of the lower jaw. Furthermore, in recent years, attempts have been made to simulate the jaw movement of the patient on a computer by using, in combination, three-dimensional data of the teeth row obtained by a computed tomography (CT) apparatus that takes a computed tomographic image of the teeth row of the patient using X-rays or a three-dimensional scanner that optically scans the teeth row of the patient and three-dimensional data corresponding to the operation of the articulator or the jig fitted to the patient.

Also, advances in image processing techniques by computers enable creation of a virtual three-dimensional surface model of the surface of the face of a patient. The surface model of the patient can be used to check changes in the shape of the face or a jaw movement caused by orthodontic treatment. For example, Japanese Patent Laying-Open No. 2017-176852 discloses a dental computed tomography apparatus capable of creating a virtual three-dimensional surface model of the face of a patient.
YANG WENWU ET AL (DOI: 10.1007/S00371-019-01677-8) discloses an aspect of anatomical face modeling: kinematic modeling of the jaw. i.e., the temporomandibular joint (TMJ). They construct a person-specific jaw kinematic model by asking an actor to exercise the entire range of motion of the jaw while keeping the lips open so that the teeth are at least partially visible. This performance is recorded with three calibrated cameras. They obtain an accurate 3D models of the teeth with a standard dental scanner and use these models to reconstruct the rigid body trajectories of the teeth from the videos. The relative rigid transformations samples between the lower and upper teeth are mapped to the Lie algebra of rigid body motions in order to linearize the rotational motion. Their main contribution is to fit these samples with a three-dimensional nonlinear model parameterizing the entire range of motion of the TMJ. They show that standard principal component analysis (PCA) fails to capture the nonlinear trajectories of the moving mandible. However, they found these nonlinearities can be captured with a special modification of autoencoder neural networks known as nonlinear PCA. By mapping back to the Lie group of rigid transformations, they obtain a parametrization of the jaw kinematics which provides an intuitive interface allowing the animators to explore realistic jaw motions in a user-friendly way.
US 2019/147591 A1 discloses a dental three-dimensional data processing device, including: an input unit for receiving teeth data, and image data of a human face; a control unit for generating three-dimensional alignment data by combining and aligning the teeth data and the image data; a movement extraction unit for generating trajectory data by analyzing the movement of teeth or temporomandibular joint from the image data; and a simulation unit for simulating the movement of the teeth or the temporomandibular joint by applying the trajectory data to the alignment data.
WO 2021/116672 A1 discloses a computer-implemented method includes receiving a 3D model of upper teeth of a patient and a 3D model of lower teeth of the patient, and receiving a plurality of 2D images, each image representative of at least a portion of the upper teeth and lower teeth of the patient. The method also includes determining, based on the 2D images, a spatial relationship between the upper teeth and lower teeth of the patient.

### SUMMARY OF THE INVENTION

As described above, in the conventional check of the jaw movement of the patient, preparation is cumbersome due to the necessity of fitting the articulator or the jig to the patient. In addition, the patient needs to make a jaw movement with the articulator or the jig fitted. Thus, an excessive load is applied to the jaw movement of the patient, and it is difficult to accurately check the jaw movement. Also, in the dental computed tomography apparatus disclosed in Japanese Patent Laying-Open No. 2017-176852, preparation is cumbersome due to the necessity of setting up a photographing station including a plurality of members such as a color camera, a laser device, and a lighting device. Thus, a technique that can easily and accurately check a jaw movement of a patient is required.

The present disclosure has been made to solve such a problem, and an object thereof is to provide a technique that can easily and accurately check a jaw movement. This is achieved by the claimed subject-matter, as captured in the appended claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram illustrating an application example of a data generation system and a data generation apparatus according to a first embodiment;
Fig. 2 is a block diagram illustrating a hardware configuration of the data generation apparatus according to the first embodiment;
Fig. 3 is a flowchart for describing an example of a data generation process executed by the data generation apparatus according to the first embodiment;
Fig. 4 is a diagram for describing processing details of STEP 1 in the data generation process;
Fig. 5 is a diagram for describing processing details of STEP 5 in the data generation process;
Fig. 6 is a diagram for describing processing details of STEP 6 and STEP 7 in the data generation process;
Fig. 7 is a diagram for describing the processing details of STEP 6 and STEP 7 in the data generation process;
Fig. 8 is a diagram for describing the processing details of STEP 6 and STEP 7 in the data generation process;
Fig. 9 is a diagram for describing the processing details of STEP 6 and STEP 7 in the data generation process;
Fig. 10 is a diagram for describing the processing details of STEP 6 and STEP 7 in the data generation process;
Fig. 11 is a diagram for describing processing details of STEP 8 in the data generation process;
Fig. 12 is a flowchart for describing an example of a data generation process executed by a data generation apparatus according to a second embodiment;
Fig. 13 is a flowchart for describing an example of a data generation process executed by a data generation apparatus according to a third embodiment;
Fig. 14 is a diagram for describing an outline of supervised learning executed by the data generation apparatus according to the third embodiment;
Fig. 15 is a diagram for describing an input and an output of the supervised learning in the data generation apparatus according to the third embodiment;
Fig. 16 is a diagram for describing the input and the output of the supervised learning in the data generation apparatus according to the third embodiment;
Fig. 17 is a flowchart for describing an example of a data generation process executed by a data generation apparatus according to a fourth embodiment;
Fig. 18 is a diagram for describing an input and an output of supervised learning in the data generation apparatus according to the fourth embodiment;
Fig. 19 is a diagram for describing the input and the output of the supervised learning in the data generation apparatus according to the fourth embodiment;
Fig. 20 is a flowchart for describing an example of a data generation process executed by a data generation apparatus according to a fifth embodiment; and
Fig. 21 is a diagram illustrating an application example of a data generation system and a data generation apparatus according to a sixth embodiment.

### DESCRIPTION OF THE PREFERRED EMBODIMENTS

### <First Embodiment>

A first embodiment of the present disclosure will be described in detail with reference to the drawings. Identical or equivalent parts in the drawings are designated by the same reference signs to omit repetitive description.

### [Application Example]

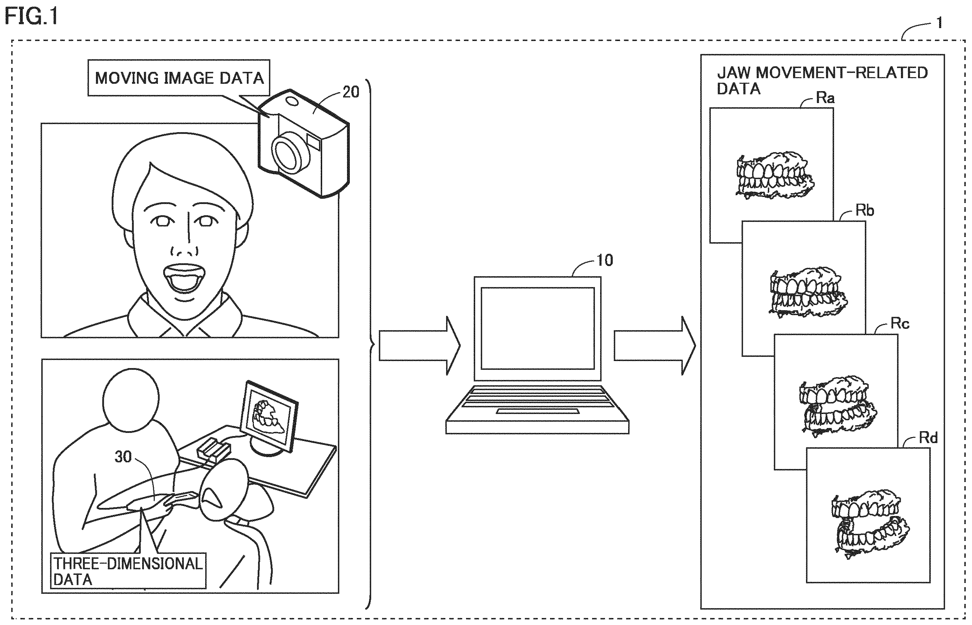

An application example of a data generation system 1 and a data generation apparatus 10 according to the first embodiment will be described with reference to Fig. 1. Fig. 1 is a diagram illustrating the application example of data generation system 1 and data generation apparatus 10 according to the first embodiment.

For example, a jaw movement may be observed to check occlusion for a patient with a symptom such as pain in the temporomandibular joint or a patient with a chief complaint of malocclusion or a jaw movement of a patient may be observed to check occlusion in orthodontic treatment of teeth or in creating a false tooth or a prosthesis. In the conventional check of the jaw movement of the patient, preparation is cumbersome due to the necessity of fitting an articulator or a jig to a subject. Thus, data generation system 1 and data generation apparatus 10 according to the first embodiment are configured to easily and accurately check a jaw movement of the subject using moving image data obtained by photographing the subject making a jaw movement with a partial teeth row of the upper and/or lower teeth row exposed and three-dimensional data of the upper and/or lower teeth row of the subject.

Specifically, as illustrated in Fig. 1, data generation system 1 includes a camera 20 capable of capturing a moving image, a three-dimensional scanner 30 capable of obtaining three-dimensional data of the subject, and data generation apparatus 10.

Camera 20 may be any camera capable of capturing a moving image of the subject (e.g., an RGB camera), such as a digital camera or a video camera. In the first embodiment, a monocular camera is described as an example of camera 20. Moving image data obtained by camera 20 includes a plurality of frame images arranged in chronological order. The frame image is one still image showing an object to be photographed (e.g., the face of the subject) in two dimensions viewed from the viewpoint of camera 20 pointed at the object to be photographed. For example, when a frame rate of camera 20 is set at 24 fps, the moving image data obtained by camera 20 includes 24 frame images per second. To check a jaw movement with higher temporal resolution, for example, a camera with a high frame rate, such as 120 fps or 240 fps, may be used as camera 20.

Three-dimensional scanner 30 is an intra oral scanner (IOS) capable of optically imaging an oral cavity of the subject by a confocal method or a triangulation method. Specifically, three-dimensional scanner 30 scans the oral cavity to obtain, as three-dimensional data, positional information (coordinates of vertical-direction, horizontal-direction, and height-direction axes) of each of grouped points (a plurality of points) showing the surface of the object to be photographed (object) in the oral cavity using an optical sensor or the like. That is, the three-dimensional data is position data including the positional information of each of the grouped points constituting the surface of the object to be scanned (e.g., the upper and/or lower teeth row in the oral cavity) placed in a certain coordinate space. When three-dimensional scanner 30 scans the upper and/or lower teeth row in the oral cavity, three-dimensional data including the positional information of each of the grouped points showing the surface of the upper and/or lower teeth row is obtained. Such three-dimensional data enables identification of a shape of the object (upper and/or lower teeth row) placed in the coordinate space. In the following description, a collection of three-dimensional data that enables the identification of the shape of the object (upper and/or lower teeth row) placed in the coordinate space is also referred to as "shape data". Data that enables identification of the position of the object (upper and/or lower teeth row) placed in the coordinate space is also referred to as "position data".

A user takes a moving image of the subject making a jaw movement with a partial teeth row of the upper and/or lower teeth row exposed using camera 20. Further, the user can obtain three-dimensional data of the upper and/or lower teeth row in the oral cavity by scanning the oral cavity of the subject using three-dimensional scanner 30. The moving image data obtained by camera 20 and the three-dimensional data obtained by three-dimensional scanner 30 are input to data generation apparatus 10. Not only the moving image data obtained by photographing the subject, but also, for example, a plurality of still images obtained by continuously photographing the subject in chronological order may be input to data generation apparatus 10.

The "user" includes operators (e.g., doctors) or assistants (e.g., dental assistants, dental technicians, and nurses) in various fields including dentistry, oral surgery, orthopedics, plastic surgery, and cosmetic surgery. The "subject" includes patients of dentistry, oral surgery, orthopedics, plastic surgery, and cosmetic surgery. The "upper and/or lower teeth row" includes both of the upper teeth row and the lower teeth row in the oral cavity or one of the upper teeth row and the lower teeth row. In other words, the "upper and/or lower teeth row" includes at least one of the upper teeth row and the lower teeth row. The "partial teeth row of the upper and/or lower teeth row" includes both of a partial teeth row included in the upper teeth row and a partial teeth row included in the lower teeth row or one of a partial teeth row included in the upper teeth row and a partial teeth row included in the lower teeth row. In other words, the "partial teeth row of the upper and/or lower teeth row" includes at least one of the partial teeth row included in the upper teeth row and the partial teeth row included in the lower teeth row.

Data generation apparatus 10 generates jaw movement-related data related to the jaw movement of the subject (jaw movement-related data Ra, Rb, Rc, and Rd illustrated in Fig. 1) based on the moving image data of the subject obtained by camera 20 and the three-dimensional data of the upper and/or lower teeth row of the subject obtained by three-dimensional scanner 30.

This enables the user to obtain the jaw movement-related data of the subject using the moving image data obtained by photographing the subject making a jaw movement with the partial teeth row of the upper and/or lower teeth row exposed and the three-dimensional data of the upper and/or lower teeth row of the subject. Thus, it is possible to easily and accurately check the jaw movement of the subject.

### [Hardware Configuration of Data Generation Apparatus]

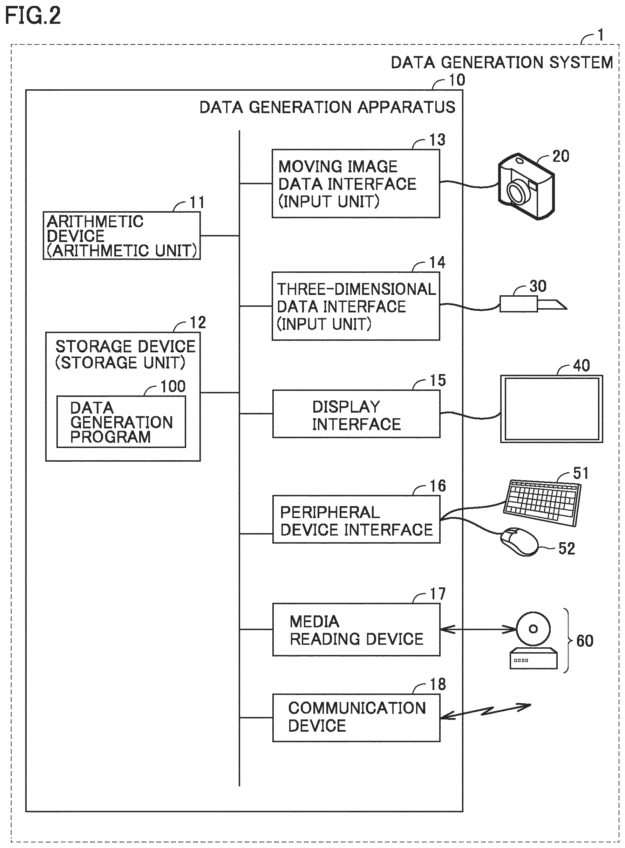

With reference to Fig. 2, a hardware configuration of data generation apparatus 10 according to the first embodiment will be described. Fig. 2 is a block diagram illustrating the hardware configuration of data generation apparatus 10 according to the first embodiment. Data generation apparatus 10 may be implemented by, for example, a general-purpose computer or a computer dedicated to data generation system 1.

As illustrated in Fig. 2, data generation apparatus 10 includes, as main hardware elements, an arithmetic device 11, a storage device 12, a moving image data interface 13, a three-dimensional data interface 14, a display interface 15, a peripheral device interface 16, a media reading device 17, and a communication device 18.

Arithmetic device 11 is an arithmetic entity (computer) that executes various programs to execute various processes and is an example of an "arithmetic unit". Arithmetic device 11 includes, for example, a processor such as a central processing unit (CPU) or a micro-processing unit (MPU). While the processor, which is an example of arithmetic device 11, has the functions of executing programs to execute various processes, some or all of these functions may be implemented using a dedicated hardware circuit such as an application specific integrated circuit (ASIC) or a field-programmable gate array (FPGA). The "processor" is not limited to a processor in the narrow sense that executes a process in a stored-program manner, such as a CPU or an MPU, and may include a hard-wired circuit such as an ASIC or an FPGA. Thus, the "processor", which is an example of arithmetic device 11, can also be read as processing circuitry where a process is predefined by computer-readable code and/or a hard-wired circuit. Arithmetic device 11 may include a single chip or a plurality of chips. Furthermore, some of the functions of arithmetic device 11 may be provided in a server apparatus (not illustrated, e.g., a cloud server apparatus).

Storage device 12 includes a volatile storage area (e.g., a working area) that temporarily stores a program code, a work memory, or the like when arithmetic device 11 executes any program. Storage device 12 may be one or more non-transitory computer readable media. For example, storage device 12 includes volatile memories such as a dynamic random access memory (DRAM) and a static random access memory (SRAM) or nonvolatile memories such as a read only memory (ROM) and a flash memory. Also, storage device 12 may be one or more computer readable storage media. For example, storage device 12 may be a solid state drive (SSD) or a hard disk drive (HDD). In this case, arithmetic device 11 may include volatile memories such as a DRAM and an SRAM or nonvolatile memories such as ROM and a flash memory.

In an example described in the first embodiment, the volatile storage area and the nonvolatile storage area are both included in storage device 12. However, the volatile storage area and the nonvolatile storage area may be included in different storage units. For example, arithmetic device 11 may include the volatile storage area, and storage device 12 may include the nonvolatile storage area. Data generation apparatus 10 may include a microcomputer including arithmetic device 11 and storage device 12.

Storage device 12 stores a data generation program 100. Data generation program 100 describes details of a data generation process for arithmetic device 11 to generate the jaw movement-related data of the subject based on the moving image data of the subject making a jaw movement and the three-dimensional data of the upper and/or lower teeth row of the subject.

Moving image data interface 13 is an interface for connecting camera 20 and is an example of an "input unit". Moving image data interface 13 enables input and output of data (e.g., moving image data) between data generation apparatus 10 and camera 20. Data generation apparatus 10 and camera 20 are connected via wired connection using a cable or wireless connection (WiFi, BlueTooth (registered trademark), or the like).

Three-dimensional data interface 14 is an interface for connecting three-dimensional scanner 30 and is an example of the "input unit". Three-dimensional data interface 14 enables input and output of data (e.g., three-dimensional data) between data generation apparatus 10 and three-dimensional scanner 30. Data generation apparatus 10 and three-dimensional scanner 30 are connected via wired connection using a cable or wireless connection (WiFi, BlueTooth (registered trademark), or the like).

Display interface 15 is an interface for connecting a display 40. Display interface 15 enables input and output of data between data generation apparatus 10 and display 40. Display 40 is an example of a "display unit".

Peripheral device interface 16 is an interface for connecting peripheral devices such as a keyboard 51 and a mouse 52. Peripheral device interface 16 enables input and output of data between data generation apparatus 10 and the peripheral devices.

Media reading device 17 reads various types of data stored in a removable disk 60, which is a storage medium, and writes various types of data to removable disk 60. The storage medium exemplified by removable disk 60 is a non-transitory and tangible computer readable storage medium and may be any form of storage medium that can store various types of data, such as a compact disc (CD), a digital versatile disc (DVD), or a universal serial bus (USB) memory. For example, media reading device 17 may obtain data generation program 100 from removable disk 60 or write the jaw movement-related data of the subject generated by arithmetic device 11 to removable disk 60.

Communication device 18 transmits and receives data to and from an external device via wired communication or wireless communication. For example, communication device 18 may transmit the jaw movement-related data of the subject generated by arithmetic device 11 to the external device.

### [Data Generation Process]

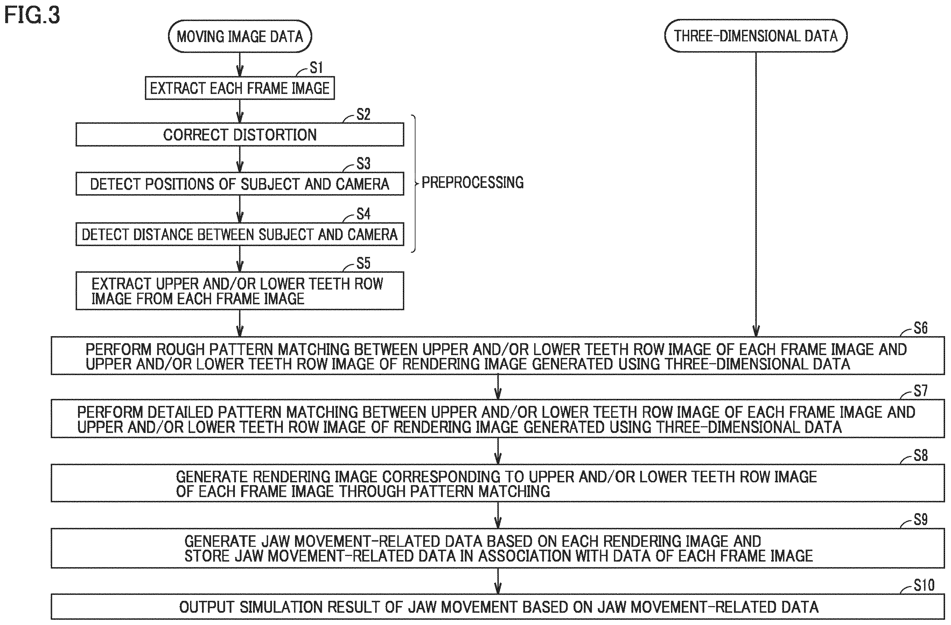

With reference to Figs. 3 to 11, the data generation process executed by data generation apparatus 10 according to the first embodiment will be described. In an example described as the data generation process according to the first embodiment illustrated in Figs. 3 to 11, through pattern matching using each frame image included in the moving image data, jaw movement-related data corresponding to each frame image is extracted. Fig. 3 is a flowchart for describing an example of the data generation process executed by data generation apparatus 10 according to the first embodiment. Each STEP (hereinbelow, referred to as "S") illustrated in Fig. 3 is implemented by arithmetic device 11 of data generation apparatus 10 executing data generation program 100.

As illustrated in Fig. 3, after input of moving image data of the subject making a jaw movement, the moving image data being obtained by camera 20, data generation apparatus 10 extracts a plurality of frame images constituting the moving image data from the moving image data (S1).

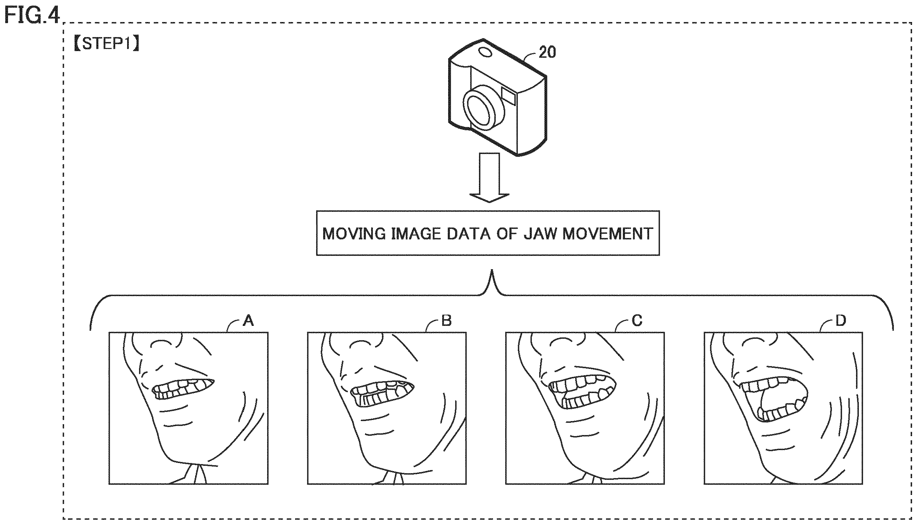

For example, Fig. 4 is a diagram for describing processing details of STEP 1 in the data generation process. As illustrated in Fig. 4, when camera 20 captures a moving image of the subject making a jaw movement with a partial teeth row exposed, the moving image data obtained by camera 20 includes a plurality of frame images A, B, C, and D showing the subject making a jaw movement with the partial teeth row exposed. For example, frame image A includes the partial teeth row with the upper and lower teeth rows closed, and frame images B to D include the partial teeth row with the upper and lower teeth rows open. Frame images A to D show a state of the upper and lower teeth rows changing from a closed state to an open state. A position (viewpoint) of camera 20 and a position of the object to be photographed are not necessarily fixed while the moving image of the subject is being captured. Thus, the upper and lower teeth rows shown by frame images A to D obtained in chronological order may look differently from the camera position. Data generation apparatus 10 extracts such frame images showing the state of the subject with the upper and lower teeth rows gradually changing from the closed state to the open state from the moving image data obtained by camera 20.

Referring back to Fig. 3, in S2 to S4, data generation apparatus 10 executes preprocessing for generating jaw movement-related data of the subject.

Specifically, when distortion corresponding to a lens of camera 20 occurs in at least one of the frame images, data generation apparatus 10 corrects the distortion in the at least one frame image (S2). Data generation apparatus 10 can improve the accuracy of pattern matching between the shape of the upper and/or lower teeth row included in the frame image and the shape of the upper and/or lower teeth row embodied based on the three-dimensional data obtained by three-dimensional scanner 30 (described further below) by performing such distortion correction.

Data generation apparatus 10 detects the position of each of the object to be photographed (e.g., the face of the subject) and camera 20 (S3). Data generation apparatus 10 can improve the accuracy of the pattern matching (described further below), and also reduce the processing load of the pattern matching and shorten the processing time for the pattern matching by using the position of each of the object to be photographed and camera 20 for the pattern matching. Data generation apparatus 10 may obtain the position of each of the object to be photographed and camera 20 at the start of or during the photographing by camera 20 and store the obtained position in storage device 12. In the process of S3, data generation apparatus 10 may search for and obtain the position of each of the object to be photographed and camera 20 stored in camera 20 or search for and obtain the position of each of the object to be photographed and camera 20 stored in storage device 12.

Data generation apparatus 10 detects a distance between the object to be photographed (e.g., the face of the subject) and camera 20 (S4). Data generation apparatus 10 can reduce the processing load of the pattern matching (described further below) and shorten the processing time for the pattern matching by using the distance between the object to be photographed and camera 20 for the pattern matching. Data generation apparatus 10 may obtain the distance between the object to be photographed and camera 20 at the start of or during the photographing by camera 20 and store the obtained distance in storage device 12. In the process of S4, data generation apparatus 10 may search for and obtain the distance stored in camera 20 or search for and obtain the distance stored in storage device 12.

Data generation apparatus 10 may perform the pattern matching (described further below) based on at least one of the positional relationship between the object to be photographed and camera 20 obtained in S3 and the distance between the object to be photographed and camera 20.

Data generation apparatus 10 extracts an upper and/or lower teeth row image corresponding to the upper and/or lower teeth row from each of the frame images extracted in S1 (S5).

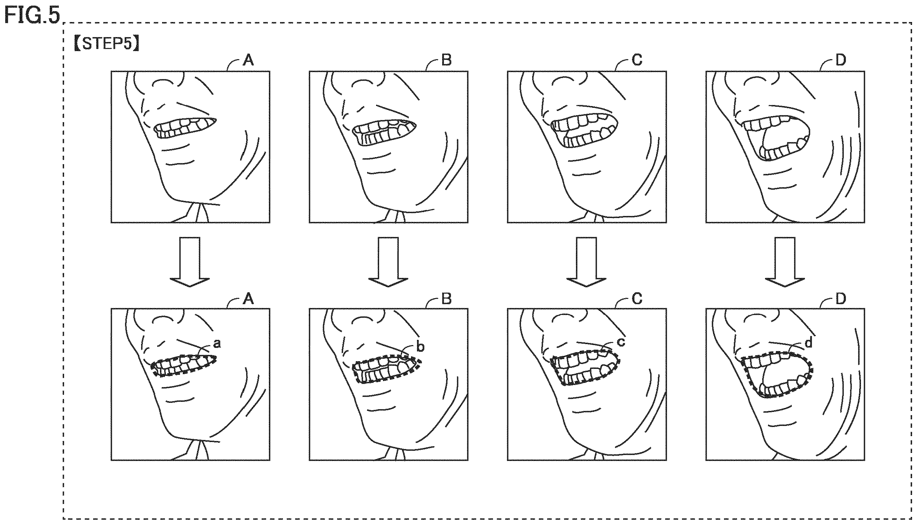

For example, Fig. 5 is a diagram for describing processing details of STEP 5 in the data generation process. As illustrated in Fig. 5, data generation apparatus 10 extracts the upper and/or lower teeth row image corresponding to the upper and/or lower teeth row from each of frame images A, B, C, and D. For example, data generation apparatus 10 compares a template image showing the shape of the upper and/or lower teeth row, the template image being previously stored, with each of frame images A, B, C, and D and extracts the upper and/or lower teeth row image from each of frame images A, B, C, and D through pattern matching. Data generation apparatus 10 may extract the upper and/or lower teeth row image from each of frame images A, B, C, and D not through the pattern matching that makes a comparison of the shape of the upper and/or lower teeth row, but through pattern matching that makes a comparison of the edge shape of the upper and/or lower teeth row. Further, the "upper and/or lower teeth row image" is an image including both of the upper teeth row and the lower teeth row in the oral cavity or one of the upper teeth row and the lower teeth row. The "upper and/or lower teeth row image" is an image including a partial teeth row of the upper and/or lower teeth row.

Data generation apparatus 10 extracts an upper and/or lower teeth row image a showing the upper and/or lower teeth row of the subject from a part of the face of the subject included in frame image A. Data generation apparatus 10 extracts an upper and/or lower teeth row image b showing the upper and/or lower teeth row of the subject from a part of the face of the subject included in frame image B. Data generation apparatus 10 extracts an upper and/or lower teeth row image c showing the upper and/or lower teeth row of the subject from a part of the face of the subject included in frame image C. Data generation apparatus 10 extracts an upper and/or lower teeth row image d showing the upper and/or lower teeth row of the subject from a part of the face of the subject included in frame image D.

Referring back to Fig. 3, after input of the three-dimensional data of the upper and/or lower teeth row of the subject obtained by three-dimensional scanner 30, data generation apparatus 10 generates a plurality of rendering images including the upper and/or lower teeth row in two dimensions viewed from multiple directions based on the three-dimensional data. The "rendering image" is an image generated by performing processing or editing on certain data. In the first embodiment, the "rendering image" is a two-dimensional image generated by performing processing or editing on the three-dimensional data obtained by three-dimensional scanner 30.

As described above, the three-dimensional data obtained by three-dimensional scanner 30 includes the positional information of each of the grouped points showing the surface of the upper and/or lower teeth row of the subject. Data generation apparatus 10 can generate the rendering image showing the upper and/or lower teeth row in two dimensions viewed from a certain viewpoint by imaging the grouped points showing the surface of the upper and/or lower teeth row using the three-dimensional data obtained by three-dimensional scanner 30. Furthermore, data generation apparatus 10 can generate a plurality of rendering images including the upper and/or lower teeth row in two dimensions viewed from multiple directions by changing the viewpoint in the multiple directions.

While generating the rendering images including the upper and/or lower teeth row in two dimensions viewed from the multiple directions based on the three-dimensional data obtained by three-dimensional scanner 30, data generation apparatus 10 performs rough pattern matching between the upper and/or lower teeth row image included in each of the frame images extracted in S5 and an upper and/or lower teeth row image included in each of the rendering images (S6) and further performs detailed pattern matching between the upper and/or lower teeth row image included in each of the frame images extracted in S5 and the upper and/or lower teeth row image included in each of the rendering images (S7).

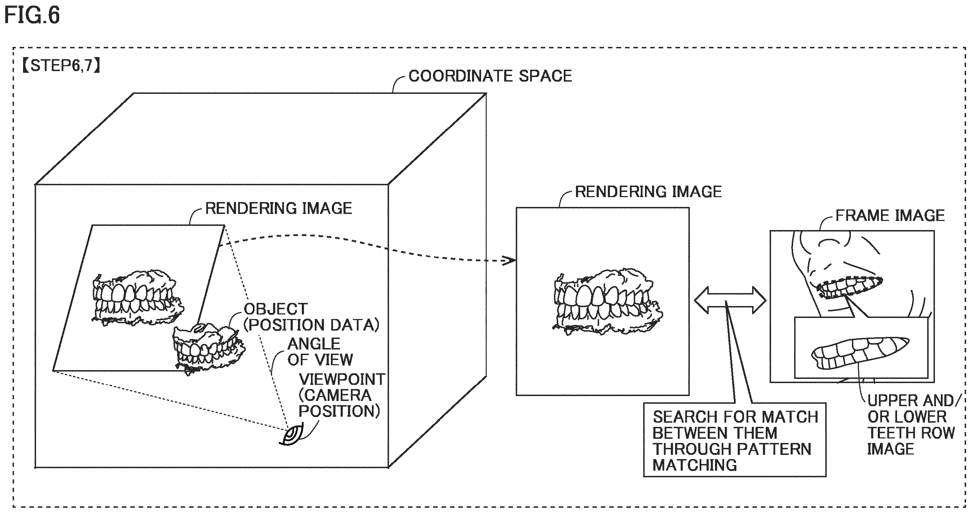

For example, Figs. 6 to 10 are diagrams for describing processing details of STEP 6 and STEP 7 in the data generation process. As illustrated in Fig. 6, data generation apparatus 10 can generate a plurality of rendering images including the upper and/or lower teeth row in two dimensions viewed from multiple directions in the horizontal direction or the vertical direction by virtually viewing the object (upper and/or lower teeth row) that can be identified based on the three-dimensional data and is placed in a coordinate space while changing the viewpoint (the position of camera 20) and the angle of view. Then, data generation apparatus 10 searches for the rendering image including the upper and/or lower teeth row image that matches in appearance the upper and/or lower teeth row image included in each of the frame images through pattern matching to generate (extract) the rendering image corresponding to the upper and/or lower teeth row image included in each of the frame images. The "searching" means finding the rendering image that matches the upper and/or lower teeth row image included in the frame image from the rendering images by trying pattern matching between each of the rendering images and the upper and/or lower teeth row image included in the frame image one or more times. When data generation apparatus 10 generates the rendering image corresponding to the upper and/or lower teeth row image included in the frame image, data generation apparatus 10 stores position data of the object (upper and/or lower teeth row) at the time the rendering image is generated. Alternatively, data generation apparatus 10 stores a change in the position data of the object (upper and/or lower teeth row) (a movement amount of the object) at the time each rendering image corresponding to each frame image is generated.

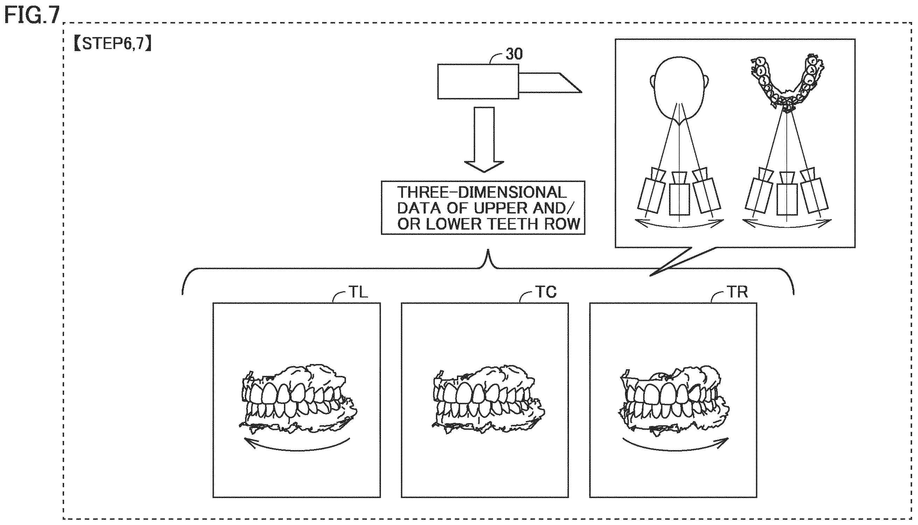

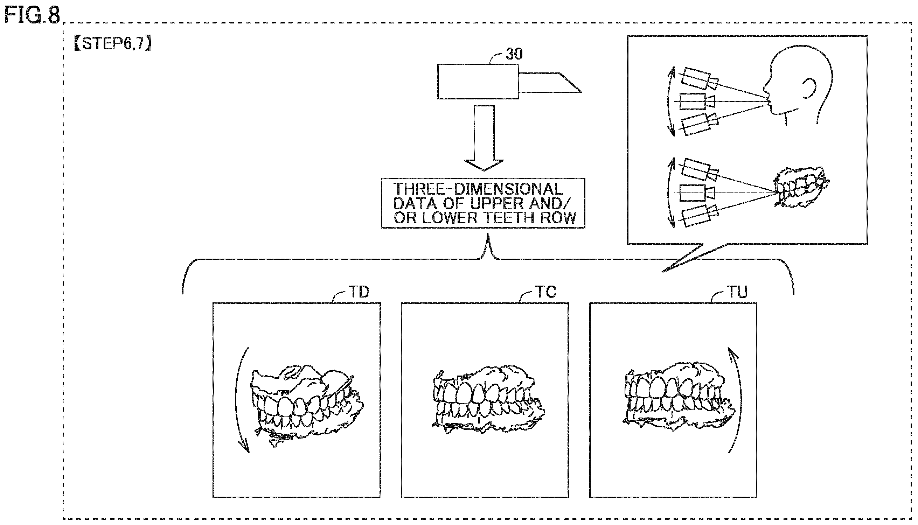

With reference to Figs. 7 and 8, an example of the generation of the rendering image will be described. As illustrated in Fig. 7, data generation apparatus 10 generates each rendering image including the upper and/or lower teeth row in two dimensions viewed from each viewpoint in the horizontal direction assuming that the viewpoint in generating the rendering image is moved in stages in the horizontal direction from the viewpoint facing the front of the face (upper and/or lower teeth row) of the subject.

Specifically, data generation apparatus 10 generates a rendering image TC including the upper and/or lower teeth row in two dimensions viewed from the front of the face (upper and/or lower teeth row) of the subject based on the three-dimensional data obtained by three-dimensional scanner 30. Data generation apparatus 10 generates a rendering image TL including the upper and/or lower teeth row in two dimensions viewed from the viewpoint slightly tilted leftward in the horizontal direction from the front of the face (upper and/or lower teeth row) of the subject (e.g., viewed from the viewpoint tilted leftward by 10 degrees in the horizontal direction from the front) based on the three-dimensional data obtained by three-dimensional scanner 30. Data generation apparatus 10 generates a rendering image TR including the upper and/or lower teeth row in two dimensions viewed from the viewpoint slightly tilted rightward in the horizontal direction from the front of the face (upper and/or lower teeth row) of the subject (e.g., viewed from the viewpoint tilted rightward by 10 degrees in the horizontal direction from the front) based on the three-dimensional data obtained by three-dimensional scanner 30.

As illustrated in Fig. 8, data generation apparatus 10 generates each rendering image including the upper and/or lower teeth row in two dimensions viewed from each viewpoint in the vertical direction assuming that the viewpoint in generating the rendering image is moved in stages in the vertical direction from the viewpoint facing the front of the face (upper and/or lower teeth row) of the subject.

Specifically, data generation apparatus 10 generates rendering image TC including the upper and/or lower teeth row in two dimensions viewed from the front of the face (upper and/or lower teeth row) of the subject based on the three-dimensional data obtained by three-dimensional scanner 30. Data generation apparatus 10 generates a rendering image TD including the upper and/or lower teeth row in two dimensions viewed from the viewpoint slightly tilted downward in the vertical direction from the front of the face (upper and/or lower teeth row) of the subject (e.g., viewed from the viewpoint tilted downward by 10 degrees in the vertical direction from the front) based on the three-dimensional data obtained by three-dimensional scanner 30. Data generation apparatus 10 generates a rendering image TU including the upper and/or lower teeth row in two dimensions viewed from the viewpoint slightly tilted upward in the vertical direction from the front of the face (upper and/or lower teeth row) of the subject (e.g., viewed from the viewpoint tilted upward by 10 degrees in the vertical direction from the front) based on the three-dimensional data obtained by three-dimensional scanner 30.

Although not illustrated, data generation apparatus 10 generates a rendering image including the upper and/or lower teeth row in two dimensions viewed from the viewpoint slightly tilted downward in the vertical direction (e.g., viewed from the viewpoint tilted downward by 10 degrees in the vertical direction from the front) and a rendering image including the upper and/or lower teeth row in two dimensions viewed from the viewpoint slightly tilted upward in the vertical direction (e.g., viewed from the viewpoint tilted upward by 10 degrees in the vertical direction from the front) based on rendering image TL. Data generation apparatus 10 generates a rendering image including the upper and/or lower teeth row in two dimensions viewed from the viewpoint slightly tilted downward in the vertical direction (e.g., viewed from the viewpoint tilted downward by 10 degrees in the vertical direction from the front) and a rendering image including the upper and/or lower teeth row in two dimensions viewed from the viewpoint slightly tilted upward in the vertical direction (e.g., viewed from the viewpoint tilted upward by 10 degrees in the vertical direction from the front) based on rendering image TR.

In this manner, data generation apparatus 10 can generate a plurality of rendering images from the viewpoints tilted in stages in the horizontal direction and a plurality of rendering images from the viewpoints tilted in stages in the vertical direction. In data generation apparatus 10, the angle by which the viewpoint is tilted from the front of the face (upper and/or lower teeth row) of the subject in the horizontal direction or the vertical direction is previously set. Setting the angle finer enables data generation apparatus 10 to generate more rendering images based on the viewpoints in multiple directions.

In S6, data generation apparatus 10 roughly searches for the rendering image including the upper and/or lower teeth row image that matches in appearance the upper and/or lower teeth row image included in each of the frame images through pattern matching using the rendering images from the viewpoints tilted by a rough angle (e.g., at 3-degree intervals) in the horizontal direction or the vertical direction. Then, in S7, data generation apparatus 10 generates rendering images from the viewpoints tilted by a fine angle (e.g., at 1-degree intervals) in the horizontal direction or the vertical direction based on the rendering image generated (extracted) in S6 and searches in detail for the rendering image including the upper and/or lower teeth row image that matches in appearance the upper and/or lower teeth row image included in each of the frame images through pattern matching.

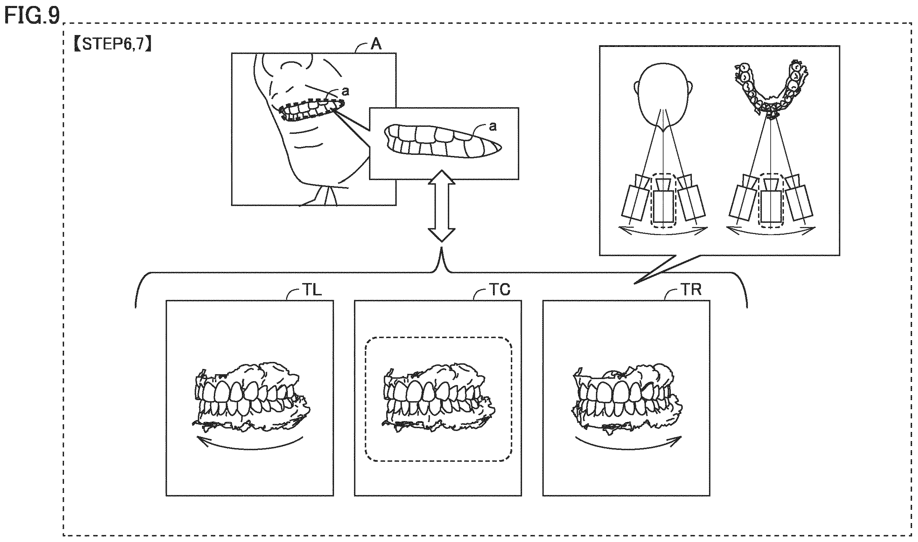

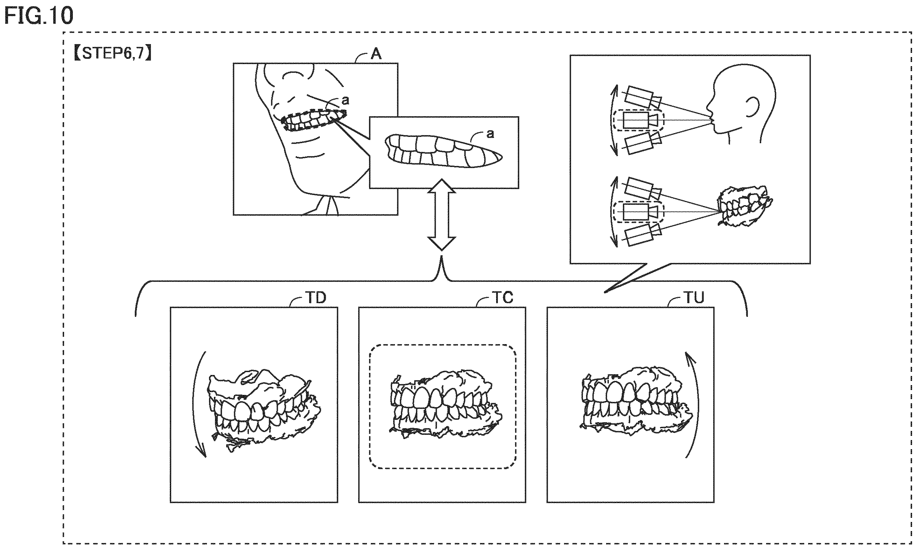

With reference to Figs. 9 and 10, an example of the pattern matching will be described. As illustrated in Fig. 9, data generation apparatus 10 performs pattern matching in the horizontal direction between the upper and/or lower teeth row image extracted in S5 based on each of the frame images constituting the moving image data and each rendering image including the upper and/or lower teeth row in two dimensions viewed from each viewpoint in the horizontal direction to extract the viewpoint of camera 20 in the horizontal direction of the upper and/or lower teeth row image extracted from each frame image.

For example, data generation apparatus 10 performs pattern matching in the horizontal direction between upper and/or lower teeth row image a extracted from frame image A showing the subject with the upper and lower teeth rows closed and rendering images TC, TL, and TR, each of which is generated based on the three-dimensional data obtained by three-dimensional scanner 30 and includes the upper and/or lower teeth row in two dimensions viewed from each view point in the horizontal direction, to extract the rendering image corresponding to upper and/or lower teeth row image a from rendering images TC, TL, and TR.

Specifically, data generation apparatus 10 performs pattern matching in the horizontal direction between the shape (appearance) of the upper and/or lower teeth row included in upper and/or lower teeth row image a and the shape (appearance) of the upper and/or lower teeth row included in each of rendering images TC, TL, and TR to extract the rendering image including the shape of the upper and/or lower teeth row that most closely resembles, in the horizontal direction, the shape of the upper and/or lower teeth row included in upper and/or lower teeth row image a from rendering images TC, TL, and TR. At this time, data generation apparatus 10 may perform the pattern matching in the horizontal direction based on tooth characteristics. For example, data generation apparatus 10 may perform the pattern matching in the horizontal direction for the shape near the incisal edge of the incisor or near the occlusal surface of the canine tooth or molar tooth. In the example of Fig. 9, data generation apparatus 10 extracts rendering image TC as the rendering image that matches upper and/or lower teeth row image a in the horizontal direction. This enables data generation apparatus 10 to extract the viewpoint of camera 20 in the horizontal direction of upper and/or lower teeth row image a. For other frame images B to D, data generation apparatus 10 can extract the viewpoint of camera 20 in the horizontal direction of the upper and/or lower teeth row image included in each of frame images B to D in the same method as for frame image A.

As illustrated in Fig. 10, data generation apparatus 10 performs pattern matching in the vertical direction between the upper and/or lower teeth row image extracted in S5 based on each of the frame images constituting the moving image data and each rendering image including the upper and/or lower teeth row in two dimensions viewed from each viewpoint in the vertical direction to extract the viewpoint of camera 20 in the vertical direction of the upper and/or lower teeth row image extracted from each frame image.

For example, data generation apparatus 10 performs pattern matching in the vertical direction between upper and/or lower teeth row image a extracted from frame image A showing the subject with the upper and lower teeth rows closed and rendering images TC, TD, and TU, each of which is generated based on the three-dimensional data obtained by three-dimensional scanner 30 and includes the upper and/or lower teeth row in two dimensions viewed from each viewpoint in the vertical direction, to extract the rendering image corresponding to upper and/or lower teeth row image a from rendering images TC, TD, and TU.

Specifically, data generation apparatus 10 performs pattern matching in the vertical direction between the shape (appearance) of the upper and/or lower teeth row included in upper and/or lower teeth row image a and the shape (appearance) of the upper and/or lower teeth row included in each of rendering images TC, TD, and TU to extract the rendering image including the shape of the upper and/or lower teeth row that most closely resembles, in the vertical direction, the shape of the upper and/or lower teeth row included in upper and/or lower teeth row image a from rendering images TC, TD, and TU. At this time, data generation apparatus 10 may perform the pattern matching in the vertical direction based on tooth characteristics. For example, data generation apparatus 10 may perform the pattern matching in the vertical direction for the shape near the incisal edge of the incisor or near the occlusal surface of the canine tooth or molar tooth. In the example of Fig. 10, data generation apparatus 10 extracts rendering image TC as the rendering image that matches upper and/or lower teeth row image a in the vertical direction. This enables data generation apparatus 10 to extract the viewpoint of camera 20 in the vertical direction of upper and/or lower teeth row image a. For other frame images B to D, data generation apparatus 10 can extract the viewpoint of camera 20 in the vertical direction of the upper and/or lower teeth row image included in each of frame images B to D in the same method as for frame image A.

Data generation apparatus 10 may generate the rendering images based on the viewpoints in the multiple directions not while performing pattern matching, but before performing pattern matching.

When data generation apparatus 10 performs the pattern matching between the upper and/or lower teeth row image extracted from each frame image and the rendering images in S6 and S7, data generation apparatus 10 may use the position of each of the object to be photographed (e.g., the face of the subject) and camera 20 obtained in S3. For example, data generation apparatus 10 may enlarge or reduce the upper and/or lower teeth row images included in the rendering images in accordance with the size of the upper and/or lower teeth row image based on the position of each of the object to be photographed (e.g., the face of the subject) and camera 20. This enables data generation apparatus 10 to improve the accuracy of the pattern matching through image recognition, and also reduce the processing load of the pattern matching and shorten the processing time for the pattern matching.

Also, since data generation apparatus 10 previously corrects distortion in the frame images in S2, it is possible to sharpen the upper and/or lower teeth row image that is extracted from each of the frame images and to be pattern-matched. This enables data generation apparatus 10 to improve the accuracy of the pattern matching through image recognition.

Referring back to Fig. 3, based on the viewpoints of camera 20 in the horizontal direction and the vertical direction of the upper and/or lower teeth row image included in each frame image extracted through the pattern matching in S6 and S7, data generation apparatus 10 generates each rendering image corresponding to the upper and/or lower teeth row image included in each frame image (S8).

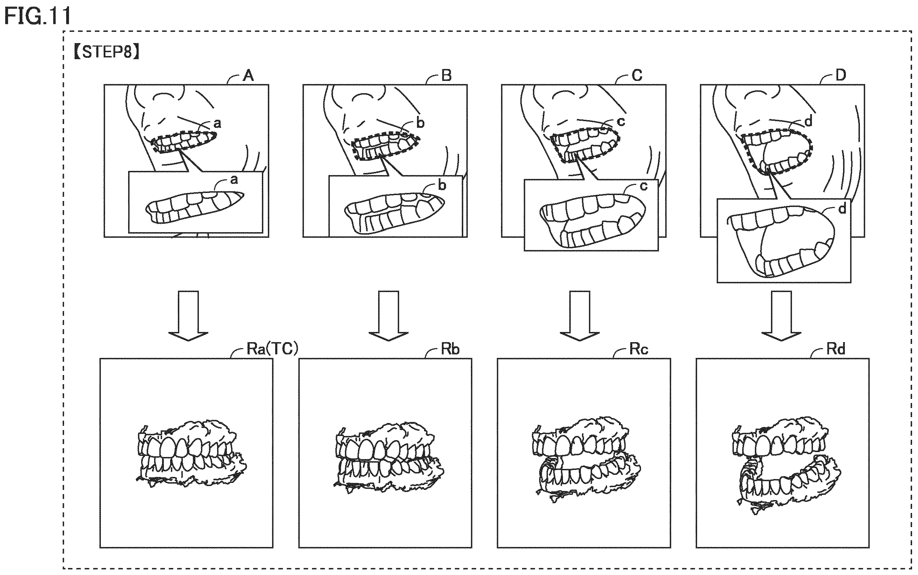

For example, Fig. 11 is a diagram for describing processing details of STEP 8 in the data generation process. As illustrated in Fig. 11, based on the viewpoints in the horizontal direction and the vertical direction in frame images A to D extracted in S6 and S7, data generation apparatus 10 generates rendering images Ra to Rd viewed from the respective viewpoints.

Specifically, data generation apparatus 10 generates rendering image Ra in which the upper and lower teeth rows are closed corresponding to upper and/or lower teeth row image a included in frame image A. Data generation apparatus 10 generates rendering image Rb in which the upper and lower teeth rows in a closed state shown by rendering image Ra are changed to a slightly open state corresponding to upper and/or lower teeth row image b included in frame image B. Data generation apparatus 10 generates rendering image Rc in which the upper and lower teeth rows in a closed state shown by rendering image Ra are changed to a more open state than in rendering image Rb corresponding to upper and/or lower teeth row image c included in frame image C. Data generation apparatus 10 generates rendering image Rd in which the upper and lower teeth rows in a closed state shown by rendering image Ra are changed to a more open state than in rendering image Rc corresponding to upper and/or lower teeth row image d included in frame image D.

Referring back to Fig. 3, data generation apparatus 10 generates jaw movement-related data related to the jaw movement of the subject shown by each of frame images A, B, C, and D based on each of generated rendering images Ra, Rb, Rc, and Rd and stores the jaw movement-related data in storage device 12 in association with data of each of frame images A, B, C, and D (S9).

For example, data generation apparatus 10 stores shape data that can identify the shape of the upper and/or lower teeth row to be scanned by three-dimensional scanner 30, that is, the shape of each of the upper teeth row and the lower teeth row. Data generation apparatus 10 stores position data (space coordinates) that can identify the position of each of the upper teeth row and the lower teeth row based on each of rendering images Ra to Rd of the upper and/or lower teeth row corresponding to the upper and/or lower teeth row image included in each of frame images A to D. Alternatively, data generation apparatus 10 may store, as the jaw movement-related data, a change between the position of each of the upper teeth row and the lower teeth row that can be identified based on rendering image Ra and the position of each of the upper teeth row and the lower teeth row that can be identified based on rendering image Rb, store a change between the position of each of the upper teeth row and the lower teeth row that can be identified based on rendering image Rb and the position of each of the upper teeth row and the lower teeth row that can be identified based on rendering image Rc, and store a change between the position of each of the upper teeth row and the lower teeth row that can be identified based on rendering image Rc and the position of each of the upper teeth row and the lower teeth row that can be identified based on rendering image Rd.

Data generation apparatus 10 generates a simulation result of the jaw movement based on the jaw movement-related data stored in storage device 12, the jaw movement-related data corresponding to each of rendering images Ra, Rb, Rc, and Rd showing the jaw movement of the subject, and outputs the generated simulation result (S10). For example, data generation apparatus 10 generates a simulation moving image that switches rendering images Ra, Rb, Rc, and Rd as illustrated in Fig. 11 in chronological order based on the jaw movement-related data, and displays the generated simulation moving image on display 40 or transmits data of the simulation moving image to the external device from communication device 18. Also, data generation apparatus 10 can display, on display 40, a result of dynamically simulating the jaw movement of the subject using only the three-dimensional data in accordance with each frame image included in the moving image data obtained by camera 20 based on the jaw movement-related data.

As described above, data generation apparatus 10 according to the first embodiment can generate the jaw movement-related data of the subject using the moving image data obtained by photographing the subject making a jaw movement with the partial teeth row of the upper and/or lower teeth row exposed and the three-dimensional data of the upper and/or lower teeth row of the subject. In the simulation moving image based on the generated jaw movement-related data, the orientation of the upper and lower jaws and the positional relationship between the upper and lower jaws accurately match the orientation of the upper and lower jaws and the positional relationship between the upper and lower jaws in the jaw movement of the subject shown by frame images A to D constituting the moving image data. This eliminates the necessity for the user to fit the articulator or the jig to the patient. Thus, preparation is not cumbersome, and no excessive load is applied to the jaw movement of the subject. As a result, the user can easily and accurately check the jaw movement of the subject.

Data generation apparatus 10 first roughly searches for the rendering image including the upper and/or lower teeth row image that matches in appearance the upper and/or lower teeth row image included in each frame image through pattern matching using the rendering images from the viewpoints tilted by a rough angle in the horizontal direction or the vertical direction, and then generates the rendering images from the viewpoints tilted by a fine angle in the horizontal direction or the vertical direction based on the rendering image generated (extracted) through the rough pattern matching and searches in detail for the rendering image including the upper and/or lower teeth row image that matches in appearance the upper and/or lower teeth row image included in each frame image through pattern matching. For example, it is assumed that the pattern matching is achieved when data generation apparatus 10 tries pattern matching with the upper and/or lower teeth row image of the frame image using the rendering images from the viewpoints changed by a rough angle (e.g., at 3-degree intervals) in each of the horizontal direction and the vertical direction, tries, based on the rendering image with a certain high level of matching (a first predetermined value or more) in the tried pattern matching, pattern matching with the upper and/or lower teeth row image of the frame image using the rendering images from the viewpoints changed by a fine angle (e.g., at 1-degree intervals) in each of the horizontal direction and the vertical direction, and obtains the rendering image with an extremely high level of matching (a second predetermined value, which is higher than the first predetermined value, or more) in the tried pattern matching. This enables data generation apparatus 10 to reduce the processing load of the pattern matching and shorten the processing time for the pattern matching compared to the case where the detailed pattern matching is performed from the beginning.

The moving image data obtained by camera 20 may be input to data generation apparatus 10 in real time during photographing of the subject. In this case, following the input of the moving image data via moving image data interface 13 during photographing of the subject, data generation apparatus 10 may execute the data generation process in Fig. 3 to generate the jaw movement-related data in real time during photographing. Accordingly, the jaw movement-related data is generated at the same time as or immediately after camera 20 photographs the subject. Thus, the user can immediately show the simulation result to the subject, which improves the convenience of the user.

### <Second Embodiment>

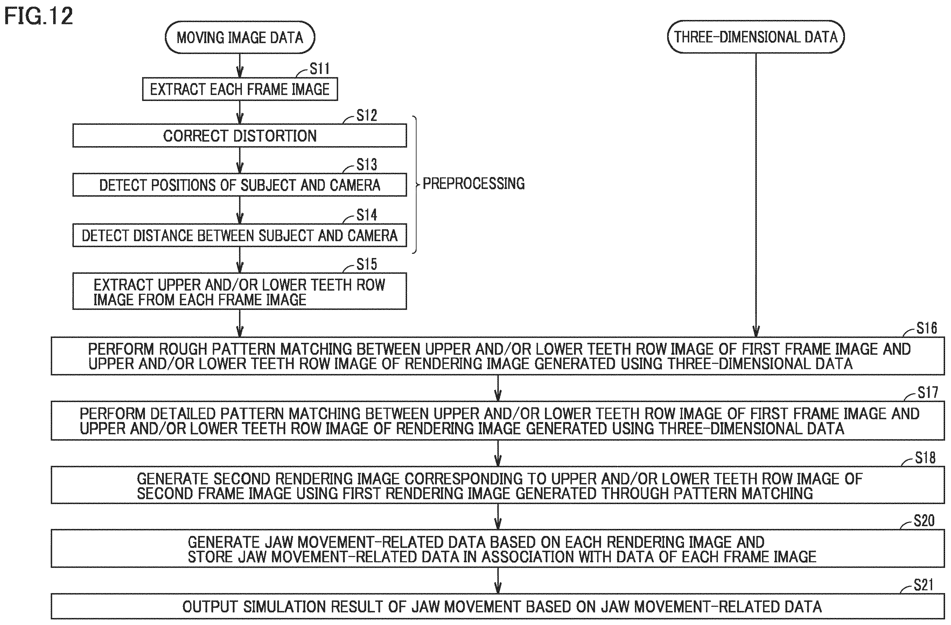

Data generation apparatus 10 according to a second embodiment of the present disclosure will be described in detail with reference to Fig. 12. In data generation apparatus 10 according to the second embodiment, only differences from data generation apparatus 10 according to the first embodiment will be described, and the same parts as those in data generation apparatus 10 according to the first embodiment will be designated by the same reference signs as those in the first embodiment to omit repetitive description.

Fig. 12 is a flowchart for describing an example of a data generation process executed by data generation apparatus 10 according to the second embodiment. In an example described as the data generation process according to the second embodiment illustrated in Fig. 12, jaw movement-related data corresponding to a first frame image included in moving image data is first extracted through pattern matching using only the first frame image, and jaw movement-related data corresponding to at least one second frame image included in the moving image data is then extracted using the jaw movement-related data corresponding to the first frame image. In the second embodiment, the position (viewpoint) of camera 20 and the position of the object to be photographed are fixed while a moving image of the subject is being captured. That is, frame images A to D obtained by camera 20 have the same position (viewpoint) of camera 20 and the same position of the upper and/or lower teeth row, which is the object to be photographed.

As illustrated in Fig. 12, as with the processes of S1 to S5 illustrated in Fig. 3, data generation apparatus 10 extracts a plurality of frame images (e.g., frame images A, B, C, and D of Fig. 4) constituting moving image data (S11), executes preprocessing (S12 to S14), and extracts an upper and/or lower teeth row image corresponding to the upper and/or lower teeth row from each of the frame images (S15).

While generating a plurality of rendering images including the upper and/or lower teeth row in two dimensions viewed from multiple directions based on three-dimensional data obtained by three-dimensional scanner 30, data generation apparatus 10 performs rough pattern matching between the upper and/or lower teeth row image included in the first frame image extracted in S15 and an upper and/or lower teeth row image included in each of the rendering images (S16) and further performs detailed pattern matching between the upper and/or lower teeth row image included in the first frame image extracted in S15 and the upper and/or lower teeth row image included in each of the rendering images (S17).

For example, in S16, data generation apparatus 10 roughly searches for the rendering image including the upper and/or lower teeth row image that matches in appearance the upper and/or lower teeth row image included in frame image A (first frame image) through pattern matching. Then, in S17, data generation apparatus 10 generates rendering images from the viewpoints tilted by a fine angle in the horizontal direction or the vertical direction based on the rendering image generated (extracted) in S16 and searches in detail for the rendering image including the upper and/or lower teeth row image that matches in appearance the upper and/or lower teeth row image included in frame image A (first frame image) through pattern matching.

Based on the viewpoints of camera 20 in the horizontal direction and the vertical direction of the upper and/or lower teeth row image included in the first frame image extracted through the pattern matching in S16 and S17, data generation apparatus 10 generates a first rendering image corresponding to the upper and/or lower teeth row image included in the first frame image and generates a second rendering image corresponding to the upper and/or lower teeth row image included in another second frame image using the generated first rendering image (S18).

For example, in S18, data generation apparatus 10 generates rendering image Ra (first rendering image) corresponding to the upper and/or lower teeth row image included in frame image A (first frame image) and generates rendering images Rb to Rd (second rendering images) corresponding to the upper and/or lower teeth row images included in respective frame images B to D (second frame images) using generated rendering image Ra (first rendering image).

Data generation apparatus 10 generates jaw movement-related data related to the jaw movement of the subject shown by each of frame images A, B, C, and D based on each of generated rendering images Ra, Rb, Rc, and Rd and stores the jaw movement-related data in storage device 12 in association with data of each of frame images A, B, C, and D (S20).

Data generation apparatus 10 generates a simulation result of the jaw movement based on the jaw movement-related data stored in storage device 12, the jaw movement-related data corresponding to each of rendering images Ra, Rb, Rc, and Rd showing the jaw movement of the subject, and outputs the generated simulation result (S21).

As described above, data generation apparatus 10 according to the second embodiment first extracts the jaw movement-related data of the upper and/or lower teeth row corresponding to the first frame image included in the moving image data through pattern matching using only the first frame image and then extracts the jaw movement-related data of the upper and/or lower teeth row corresponding to the second frame image included in the moving image data using the jaw movement-related data of the upper and/or lower teeth row corresponding to the first frame image. Thus, only one frame image is subjected to the pattern matching. This enables data generation apparatus 10 to reduce the processing load of the pattern matching and shorten the processing time for the pattern matching compared to the case where the pattern matching is performed on each of the frame images constituting the moving image data.

### <Further Example>

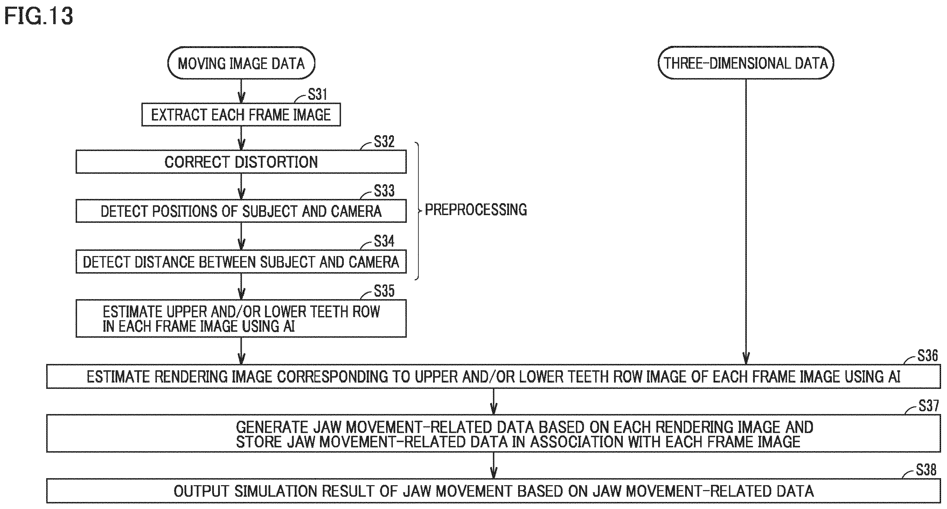

A Data generation apparatus 10 provided as further example will be described in detail with reference to Figs. 13 to 16. In data generation apparatus 10 according to this unclaimed example, only differences from data generation apparatus 10 according to the first embodiment will be described, and the same parts as those in data generation apparatus 10 according to the first embodiment will be designated by the same reference signs as those in the first embodiment to omit repetitive description.

Fig. 13 is a flowchart for describing an example of a data generation process executed by data generation apparatus 10 according to this example. In an example described as the data generation process according to the third embodiment illustrated in Fig. 13, an area (shape) of the upper and/or lower teeth row in each of frame images constituting moving image data is estimated using AI (artificial intelligence), and each rendering image corresponding to the upper and/or lower teeth row included in each of the frame images is further estimated using AI.

As illustrated in Fig. 13, as with the processes of S1 to S4 illustrated in Fig. 3, data generation apparatus 10 extracts a plurality of frame images (e.g., frame images A, B, C, and D of Fig. 4) constituting moving image data (S31) and executes preprocessing (S32 to S34).

Data generation apparatus 10 estimates the upper and/or lower teeth row in each of the frame images constituting the moving image data using AI (S35). Specifically, based on input data including each frame image, data generation apparatus 10 estimates an area (shape) of the upper and/or lower teeth row in each frame image using an estimation model 130 for estimating the area (shape) of the upper and/or lower teeth row in each frame image based on the input data.

Estimation model 130 includes a known neural network used in deep learning-based image recognition processing, such as convolution neural network (CNN), generative adversarial network (GAN), recurrent neural network (RNN), or long short term memory network (LSTM network), and a parameter relating to the neural network.

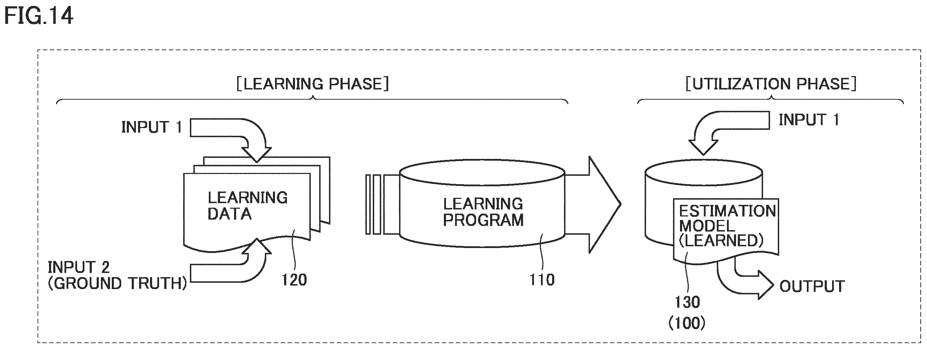

With reference to Fig. 14, supervised learning for estimation model 130 will be described. Fig. 14 is a diagram for describing an outline of the supervised learning executed by data generation apparatus 10 according to this example. As illustrated in Fig. 14, in a learning phase, data generation apparatus 10 executes a learning program 110 to machine-learn estimation model 130 based on learning data 120 including an input 1 and an input 2 (ground truth). In a utilization phase, data generation apparatus 10 estimates an output based on input 1 using learned estimation model 130.

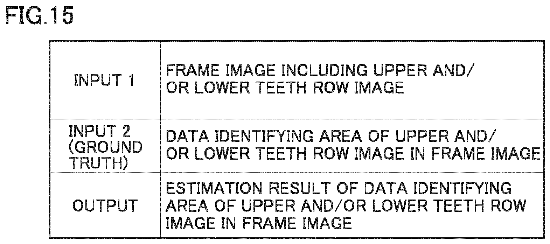

Fig. 15 is a diagram for describing the input and the output of the supervised learning in data generation apparatus 10 according to this example. As illustrated in Fig. 15, the frame image including the upper and/or lower teeth row image is used as input 1 which is problem data of the machine learning. Data that identifies the area of the upper and/or lower teeth row in the frame image of input 1 is used as input 2 which is ground truth data of the machine learning. Data for distinguishing between an area of the upper and/or lower teeth row and an area of a part other than the upper and/or lower teeth row in the frame image is an example of the data that identifies the area of the upper and/or lower teeth row in the frame image. For example, the frame image added with data of "1" for the area of the upper and/or lower teeth row and "0" for the area of the part other than the upper and/or lower teeth row is used as input 2. Furthermore, a distinction may be made in data that identifies the areas between the upper teeth row and the lower teeth row. For example, the frame image added with data of "1" for the area of the upper teeth row, "2" for the area of the lower teeth row, and "0" for the area of the part other than the upper and lower teeth rows may be used as input 2. An estimation result of the data that identifies the area of the upper and/or lower teeth row in the frame image of input 1 is used as the output that data generation apparatus 10 estimates based on input 1.

That is, in the learning phase, based on the frame image including the upper and/or lower teeth row image (input 1), data generation apparatus 10 estimates data that identifies the area of the upper and/or lower teeth row in the frame image (output) and compares the estimated data that identifies the area of the upper and/or lower teeth row (output) with the data that identifies the area of the upper and/or lower teeth row in the frame image as the ground truth (input 2). Data generation apparatus 10 does not update the parameter included in estimation model 130 when these data match and updates the parameter included in estimation model 130 so that these data match when these data do not match, thereby optimizing estimation model 130. Learned estimation model 130 machine-learned in this manner is stored in storage device 12 as data generation program 100. In the utilization phase, based on the frame image including the upper and/or lower teeth row image (input 1), data generation apparatus 10 estimates the upper and/or lower teeth row image included in the frame image (output), that is, the shape of the upper and/or lower teeth row shown by the frame image using learned estimation model 130.

Referring back to Fig. 13, data generation apparatus 10 estimates each of rendering images (e.g., rendering images Ra, Rb, Rc, and Rd of Fig. 11) corresponding to each of the upper and/or lower teeth row images (e.g., upper and/or lower teeth row images a, b, c, and d of Fig. 5) estimated in S35 based on each of frame image A, B, C, and D constituting the moving image data using AI (S36). Specifically, based on input data including the upper and/or lower teeth row image included in each of the frame images estimated in S35 and a plurality of rendering images including the upper and/or lower teeth row image, data generation apparatus 10 estimates the rendering image corresponding to the upper and/or lower teeth row image included in each of the frame images using estimation model 130 for estimating the rendering image corresponding to the upper and/or lower teeth row image based on the input data.

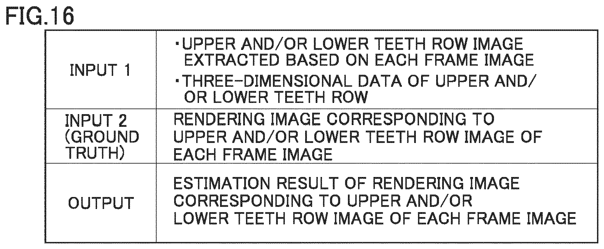

Fig. 16 is a diagram for describing the input and the output of the supervised learning in data generation apparatus 10 according to this example. As illustrated in Fig. 16, the upper and/or lower teeth row image extracted based on each frame image and three-dimensional data of the upper and/or lower teeth row are used as input 1, which is the problem data of the machine learning. The rendering image corresponding to the upper and/or lower teeth row image included in each frame image of input 1 is used as input 2, which is the ground truth data of the machine learning. An estimation result of the rendering image corresponding to the upper and/or lower teeth row image included in each frame image of input 1 is used as the output that data generation apparatus 10 estimates based on input 1.

That is, in the learning phase, based on the upper and/or lower teeth row image extracted based on each frame image and the three-dimensional data of the upper and/or lower teeth row (input 1), data generation apparatus 10 estimates the rendering image corresponding to the upper and/or lower teeth row image included in each frame image (output) and compares each estimated rendering image (output) with the rendering image corresponding to the upper and/or lower teeth row image included in each frame image as the ground truth (input 2). Data generation apparatus 10 does not update the parameter included in estimation model 130 when these images match and updates the parameter included in estimation model 130 so that these images match when these images do not match, thereby optimizing estimation model 130. Learned estimation model 130 machine-learned in this manner is stored in storage device 12 as data generation program 100. In the utilization phase, based on the upper and/or lower teeth row image extracted based on each frame image and the three-dimensional data of the upper and/or lower teeth row (input 1), data generation apparatus 10 estimates the rendering image corresponding to the upper and/or lower teeth row image included in each frame image (output) using learned estimation model 130.

Referring back to Fig. 13, data generation apparatus 10 generates jaw movement-related data related to the jaw movement of the subject shown by each of frame images A, B, C, and D based on each of generated rendering images Ra, Rb, Rc, and Rd and stores the jaw movement-related data in storage device 12 in association with data of each of frame images A, B, C, and D (S37).

Data generation apparatus 10 generates a simulation result of the jaw movement based on the jaw movement-related data stored in storage device 12, the jaw movement-related data corresponding to each of rendering images Ra, Rb, Rc, and Rd showing the jaw movement of the subject, and outputs the generated simulation result (S38).

As described above, since data generation apparatus 10 according to this example estimates the area (shape) where the upper and/or lower teeth row is located in each of the frame images constituting the moving image data using AI, it is possible to more accurately extract the upper/lower teeth row image from each of the frame images constituting the moving image data. Furthermore, since data generation apparatus 10 estimates each rendering image corresponding to the upper and/or lower teeth row included in each frame image using AI, it is possible to more accurately extract each rendering image corresponding to the upper and/or lower teeth row included in each frame image. This enables data generation apparatus 10 to generate the jaw movement-related data that accurately matches the jaw movement of the subject.

### <Further Example>

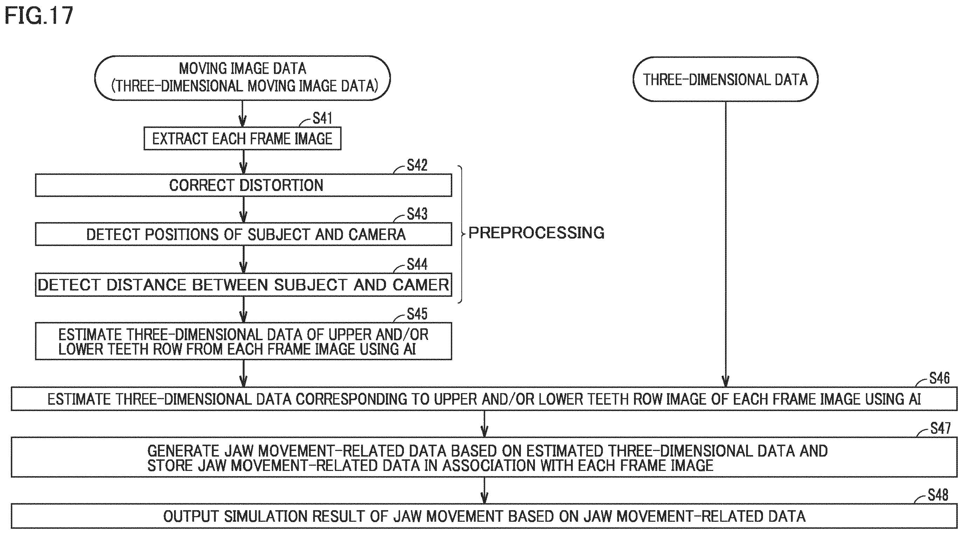

Data generation apparatus 10 according to a further, unclaimed example of the present disclosure will be described in detail with reference to Figs. 17 to 19. In data generation apparatus 10 according to this further example, only differences from data generation apparatus 10 according to the previous example will be described, and the same parts as those in data generation apparatus 10 according to the previous example will be designated by the same reference signs as those in the third embodiment to omit repetitive description.

In data generation apparatus 10 according to the further example, camera 20 includes a three-dimensional camera capable of detecting three-dimensional position coordinates of the object to be photographed. For example, camera 20 may include a time of flight (ToF) depth camera capable of detecting the three-dimensional position coordinates of the object to be photographed by measuring the distance to the object to be photographed using reflection of light (e.g., infrared rays) or a stereo camera capable of detecting the three-dimensional position coordinates of the object to be photographed by a plurality of cameras (e.g., two cameras) photographing the same space from different positions. That is, the moving image data input to data generation apparatus 10 according to the further example includes three-dimensional data that is positional information (coordinates of vertical-direction, horizontal-direction, and height-direction axes) of each of grouped points (a plurality of points) showing the surface of the upper and/or lower teeth row of the subject, that is, the object to be photographed.

Fig. 17 is a flowchart for describing an example of a data generation process executed by data generation apparatus 10 according to this further example. the fourth embodiment. As illustrated in Fig. 17, as with the processes of S1 to S5 illustrated in Fig. 3, data generation apparatus 10 extracts a plurality of frame images (e.g., frame images A, B, C, and D of Fig. 4) constituting moving image data (S41) and executes preprocessing (S42 to S44). Note that, in this further exampe, each of the frame images extracted in S41 is constituted of moving image data including the three-dimensional position coordinates.

Data generation apparatus 10 estimates three-dimensional data of the upper and/or lower teeth row from each of the frame images constituting the moving image data using AI (S45). Specifically, based on input data including each frame image, data generation apparatus 10 estimates the three-dimensional data of the upper and/or lower teeth row included in each frame image using an estimation model 130 for estimating the three-dimensional data of the upper and/or lower teeth row included in each frame image based on the input data.

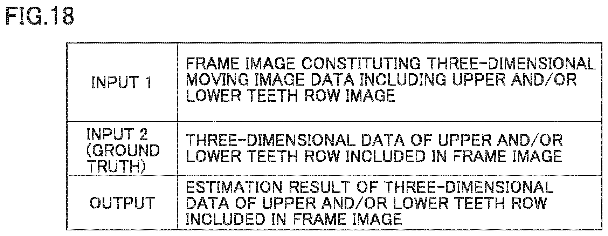

Fig. 18 is a diagram for describing an input and an output of supervised learning in data generation apparatus 10 according to this further example. As illustrated in Fig. 18, the frame image constituting three-dimensional moving image data including the upper and/or lower teeth row image is used as input 1, which is the problem data of machine learning. Three-dimensional data of the upper and/or lower teeth row included in the frame image of input 1 is used as input 2, which is the ground truth data of the machine learning. An estimation result of the three-dimensional data of the upper and/or lower teeth row included in the frame image of input 1 is used as the output that data generation apparatus 10 estimates based on input 1.

That is, in a learning phase, based on the frame image constituting the three-dimensional moving image data including the upper and/or lower teeth row image (input 1), data generation apparatus 10 estimates the three-dimensional data of the upper and/or lower teeth row included in the frame image (output) and compares the estimated three-dimensional data of the upper and/or lower teeth row (output) with the three-dimensional data of the upper and/or lower teeth row included in the frame image as the ground truth (input 2). Data generation apparatus 10 does not update the parameter included in estimation model 130 when these data match and updates the parameter included in estimation model 130 so that these data match when these data do not match, thereby optimizing estimation model 130. Learned estimation model 130 machine-learned in this manner is stored in storage device 12 as data generation program 100. In a utilization phase, based on the frame image constituting the three-dimensional moving image data including the upper and/or lower teeth row image (input 1), data generation apparatus 10 estimates the three-dimensional data of the upper and/or lower teeth row included in the frame image (output) using learned estimation model 130.

Referring back to Fig. 17, data generation apparatus 10 estimates three-dimensional data corresponding to the upper and/or lower teeth row extracted in S45 based on each of frame images A, B, C, and D constituting the moving image data from the three-dimensional data obtained by three-dimensional scanner 30 using AI (S46). Specifically, based on input data including the three-dimensional data of the upper and/or lower teeth row included in each frame image estimated in S45 and the three-dimensional data of the upper and/or lower teeth row obtained by three-dimensional scanner 30, data generation apparatus 10 estimates the three-dimensional data corresponding to the upper and/or lower teeth row using estimation model 130 for estimating the three-dimensional data corresponding to the upper and/or lower teeth row included in each frame image based on the input data.

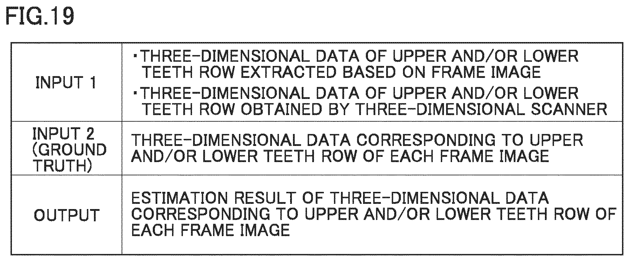

Fig. 19 is a diagram for describing the input and the output of the supervised learning in data generation apparatus 10 according to this further example. As illustrated in Fig. 19, the three-dimensional data of the upper and/or lower teeth row extracted based on each frame image and the three-dimensional data of the upper and/or lower teeth row obtained by three-dimensional scanner 30 are used as input 1, which is the problem data of the machine learning. The three-dimensional data corresponding to the upper and/or lower teeth row included in each frame image of input 1 is used as input 2, which is the ground truth data of the machine learning. An estimation result of the three-dimensional data that corresponds to the upper and/or lower teeth row included in each frame image of input 1 and is obtained by three-dimensional scanner 30 is used as the output that data generation apparatus 10 estimates based on input 1.

That is, in the learning phase, based on the three-dimensional data of the upper and/or lower teeth row extracted based on each frame image (input 1), data generation apparatus 10 estimates the three-dimensional data corresponding to the upper and/or lower teeth row included in each frame image from the three-dimensional data obtained by three-dimensional scanner 30 and compares the estimated three-dimensional data corresponding to the upper and/or lower teeth row (output) with the three-dimensional data corresponding to the upper and/or lower teeth row included in each frame image as the ground truth (input 2). Data generation apparatus 10 does not update the parameter included in estimation model 130 when these data match and updates the parameter included in estimation model 130 so that these data match when these data do not match, thereby optimizing estimation model 130. Learned estimation model 130 machine-learned in this manner is stored in storage device 12 as data generation program 100. In the utilization phase, based on the three-dimensional data of the upper and/or lower teeth row extracted based on each frame image (input 1), data generation apparatus 10 estimates the three-dimensional data corresponding to the upper and/or lower teeth row included in each frame image (output) from the three-dimensional data obtained by three-dimensional scanner 30 using learned estimation model 130.

Referring back to Fig. 17, data generation apparatus 10 generates jaw movement-related data related to the jaw movement of the subject shown by each of extracted frame images A, B, C, and D and stores the jaw movement-related data in storage device 12 in association with data of each of frame images A, B, C, and D (S47).

Data generation apparatus 10 generates a simulation result of the jaw movement based on the jaw movement-related data of the subject stored in storage device 12 and outputs the generated simulation result (S48).

As described above, since data generation apparatus 10 estimates the three-dimensional data of the upper and/or lower teeth row from each of the frame images constituting the moving image data using AI, it is possible to more accurately extract the upper-lower teeth row from each of the frame images constituting the moving image data. Furthermore, since data generation apparatus 10 estimates the three-dimensional data corresponding to the upper-lower teeth row included in each frame image from the three-dimensional data obtained by three-dimensional scanner 30 using AI, it is possible to more accurately extract the three-dimensional data corresponding to the upper-lower teeth row included in each frame image. In addition, since the moving image data obtained by camera 20 is three-dimensional data including the positional information of each of the grouped points showing the surface of the upper and/or lower teeth row of the subject, data generation apparatus 10 can perform matching between three-dimensional data between the three-dimensional data of the upper and/or lower teeth row obtained by camera 20 and the three-dimensional data of the upper and/or lower teeth row obtained by three-dimensional scanner 30. This enables data generation apparatus 10 to generate the jaw movement-related data that accurately matches the jaw movement of the subject and shorten the processing time for the matching.

### <Further Example>

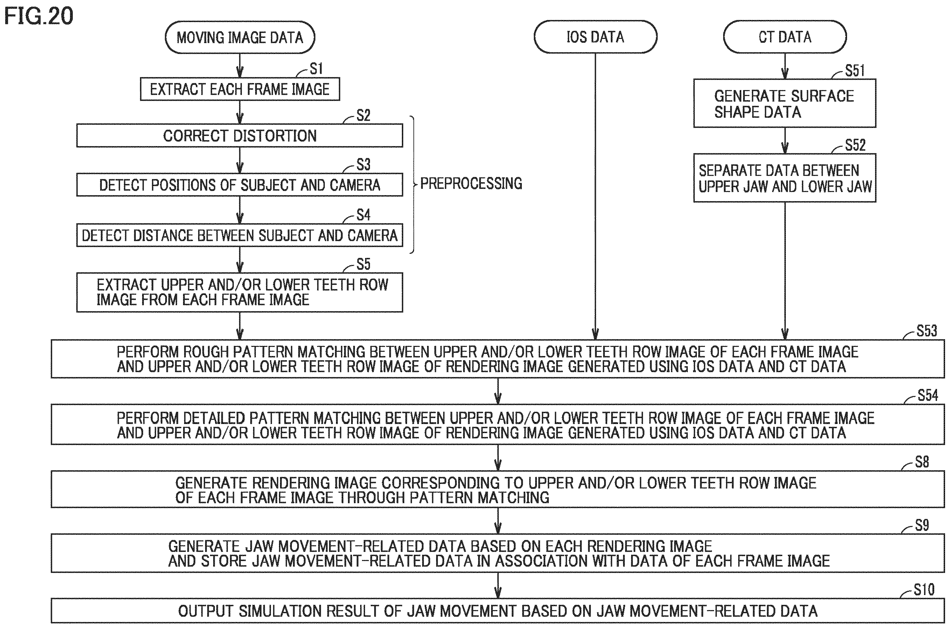

Data generation apparatus 10 according to a further example of the present disclosure will be described in detail with reference to Fig. 20. In data generation apparatus 10 according to this further example, only differences from data generation apparatus 10 according to the first embodiment will be described, and the same parts as those in data generation apparatus 10 according to the first embodiment will be designated by the same reference signs as those in the first embodiment to omit repetitive description.

Fig. 20 is a flowchart for describing an example of a data generation process executed by data generation apparatus 10 according to this further example. In this further example illustrated in Fig. 20, data generation system 1 includes a computed tomography (CT) imaging device (not illustrated). The CT imaging device is an X-ray imaging device that rotates a transmitter and a receiver of X-rays, which are a type of radiation, around the face of the subject to take a computed tomographic image of the upper and lower jaws of the subject. A user can obtain three-dimensional volume (voxel) data of a hard tissue part (e.g., bone and teeth) other than a soft tissue part (e.g., skin and gums) around the upper and lower jaws of the subject by photographing the upper and lower jaws of the subject using the CT imaging device. The user can generate a tomographic image or an appearance image of the object to be photographed by tomographic-processing the volume data of the object to be photographed obtained using the CT imaging device. Hereinbelow, three-dimensional surface coordinate data obtained by three-dimensional scanner 30 may also be referred to as "IOS data", and the three-dimensional volume data obtained by the CT imaging device may also be referred to as "CT data". The IOS data and the CT data both correspond to the three dimensional data of the upper and/or lower teeth row. Thus, the IOS data and the CT data may be collectively referred to as "three-dimensional data".

In the data generation process, in addition to the IOS data of the upper and/or lower teeth row of the subject obtained by three-dimensional scanner 30, the CT data of the upper and lower jaws including the upper and/or lower teeth row of the subject obtained by the CT imaging device is input.

As illustrated in Fig. 20, data generation apparatus 10 generates surface shape data showing the shape of the surface of the hard tissue part (e.g., bone and teeth) in the upper and lower jaws of the subject based on the CT data input from the CT imaging device (S51). Data generation apparatus 10 separates the surface shape data generated in S51 between the upper jaw and the lower jaw (S52).

Data generation apparatus 10 generates a plurality of rendering images including the upper and/or lower teeth row in two dimensions viewed from multiple directions based on the IOS data of the upper and/or lower teeth row of the subject obtained by three-dimensional scanner 30 and the surface shape data of the upper and lower jaws generated in S52. The IOS data includes positional information of each of the grouped points showing the surface of the upper and/or lower teeth row and thus can precisely represent the position of each tooth and occlusion between the upper teeth row and the lower teeth row. On the other hand, the surface shape data of the upper and lower jaws generated based on the CT data can precisely represent the surface shape of the upper and/or lower teeth row and the root of each tooth. Thus data generation apparatus 10 can generate the rendering image that more precisely represents the shape, position, and the like of the upper and/or lower teeth row in two dimensions by combining the IOS data of the upper and/or lower teeth row and the surface shape data of the upper and lower jaws.

While generating the rendering images including the upper and/or lower teeth row in two dimensions viewed from the multiple directions based on the rendering image using the IOS data and the CT data as described above, data generation apparatus 10 performs rough pattern matching between the upper and/or lower teeth row image included in each of the frame images extracted in S5 and an upper and/or lower teeth row image included in each of the rendering images (S53) and further performs detailed pattern matching between the upper and/or lower teeth row image included in each of the frame images extracted in S5 and the upper and/or lower teeth row image included in each of the rendering images (S54).

Then, data generation apparatus 10 executes processes of S8 to S10 in the same manner as the data generation process according to the first embodiment illustrated in Fig. 3. Accordingly, data generation apparatus 10 can generate the jaw movement-related data of the subject.

As described above, data generation apparatus 10 according to this further example can generate the rendering image that more precisely represents the shape, position, and the like of the upper and/or lower teeth row in two dimensions using not only the IOS data obtained by three-dimensional scanner 30, but also the CT data obtained by the CT imaging device and generate the jaw movement-related data of the subject based on the moving image data of the subject obtained by camera 20 and the rendering image. This enables data generation apparatus 10 to generate the jaw movement-related data that accurately matches the jaw movement of the subject.

In both of data generation apparatuses 10 according to the second embodiment and first example, the IOS data obtained by three-dimensional scanner 30 and the CT data obtained by the CT imaging device may be employed as the three-dimensional data input to data generation apparatus 10. In this case, in both of data generation apparatuses 10, pattern matching may be executed by executing the processes of S51 to S54 of the data generation process according to the fifth embodiment illustrated in Fig. 20. Also, the three-dimensional data input to data generation apparatus 10 may include not only the IOS data obtained by directly scanning the upper and/or lower teeth row of the subject using the optical method of three-dimensional scanner 30 and the CT data obtained by taking a computed tomographic image of the upper and lower jaws of the subject using the CT imaging device as described above, but also surface shape data obtained by scanning a teeth and jaw model produced through impression taking of the upper and/or lower teeth row of the subject using a desktop scanner.

Data generation apparatus 10 is configured to separate the surface shape data between the upper jaw and the lower jaw and generate the rendering image corresponding to the upper jaw and the rendering image corresponding to the lower jaw based on each of the separated surface shape data of the upper jaw and the surface shape data of the lower jaw. However, data generation apparatus 10 may generate the rendering image of the upper and/or lower jaw combining the upper jaw and the lower jaw based on surface shape data of the upper and/or lower jaw. Then, data generation apparatus 10 may perform pattern matching with the upper and/or lower teeth row image using the generated rendering image of the upper and/or lower jaw. Furthermore, in moving image data of a biting action, an image of an occluded state is also captured. Thus, data generation apparatus 10 may additionally use IOS data of the occluded state when generating the rendering image of the upper and/or lower jaw.

### <Last Example>

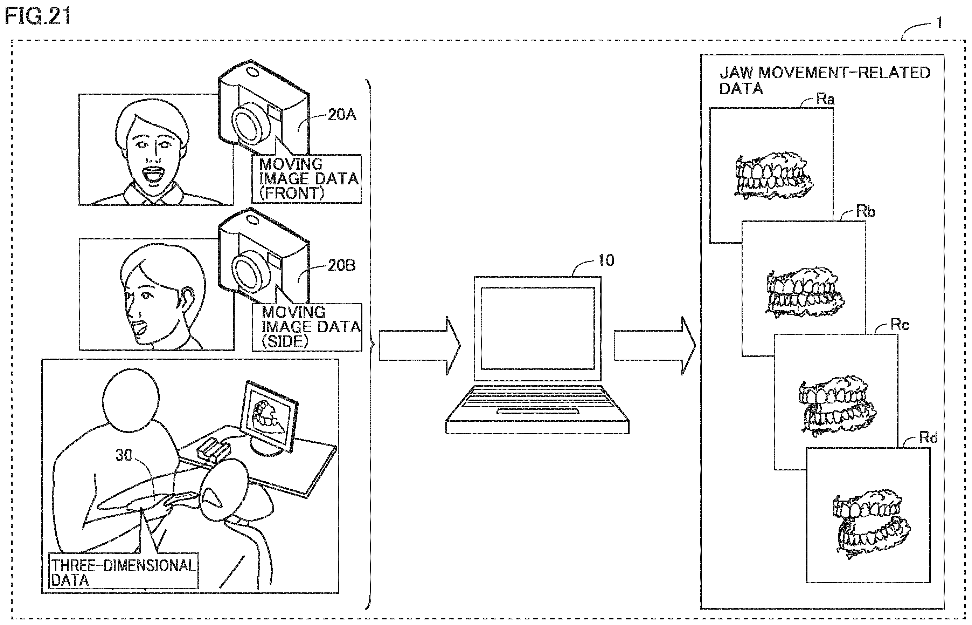

Data generation apparatus 10 according to a last example of the present disclosure will be described in detail with reference to Fig. 21. In data generation apparatus 10 according to this last example, only differences from data generation apparatus 10 according to the first embodiment will be described, and the same parts as those in data generation apparatus 10 according to the first embodiment will be designated by the same reference signs as those in the first embodiment to omit repetitive description.

In data generation apparatus 10 according to this last example, camera 20 is configured to capture moving images of the object to be photographed (e.g., the face of the subject) from a plurality of viewpoints. For example, Fig. 21 is a diagram illustrating an application example of data generation system 1 and data generation apparatus 10 according to this last example. As illustrated in Fig. 21, data generation system 1 a camera 20A that photographs the face of the subject from substantially the front of the subject (e.g., the front of the face of the subject) and a camera 20B that photographs the face of the subject from substantially the side of the subject (e.g., the side of the face of the subject).

Data generation apparatus 10 may execute pattern matching (e.g., the processes of S6 and S7 of Fig. 3) using an upper and/or lower teeth row image extracted from each of the frame images constituting moving image data obtained by camera 20A and an upper and/or lower teeth row image extracted from each of the frame images constituting moving image data obtained by camera 20B. At this time, data generation apparatus 10 may preferentially use the moving image data with a higher pattern matching accuracy between the moving image data obtained by camera 20A and the moving image data obtained by camera 20B.

For example, camera 20A photographs the face of the subject from the front of the face of the subject, and the shape in the horizontal direction of the upper and/or lower teeth row extracted from each frame image is more likely to be accurately represented. Thus, data generation apparatus 10 may execute pattern matching in the horizontal direction by preferentially using the upper and/or lower teeth row image extracted from each of the frame images constituting the moving image data obtained by camera 20A.

Camera 20B photographs the face of the subject from the side of the face of the subject, and the shape in the vertical direction of the upper and/or lower teeth row extracted from each frame image is more likely to be accurately represented. Thus, data generation apparatus 10 may execute pattern matching in the vertical direction by preferentially using the upper and/or lower teeth row image extracted from each of the frame images constituting the moving image data obtained by camera 20B.

As described above, data generation apparatus 10 according to this last example can generate the jaw movement-related data of the subject using the moving image data obtained by photographing the object to be photographed from the plurality of viewpoints. Thus, data generation apparatus 10 can generate the jaw movement-related data that accurately matches the jaw movement of the subject.

The camera may be disposed not substantially forward of the subject or substantially sideward of the subject, but substantially diagonally forward of the subject. That is, data generation system 1 may include one camera disposed at any one of the positions substantially forward of the subject, substantially diagonally forward of the subject, and substantially sideward of the subject or may include a plurality of cameras disposed at any two or more of the positions substantially forward of the subject, substantially diagonally forward of the subject, and substantially sideward of the subject. Data generation apparatus 10 may obtain moving image data from a plurality of cameras that simultaneously photograph the subject from a plurality of viewpoints and execute pattern matching (e.g., the processes of S6 and S7 of Fig. 3) using the moving image data obtained from the plurality of cameras.

Data generation apparatus 10 according to each of the embodiments or examples described above may be a cloud server apparatus. For example, the user or the subject himself/herself may upload moving image data obtained by photographing the subject and three-dimensional data of the upper and/or lower teeth row of the subject to cloud data generation apparatus 10 for registration. Then, data generation apparatus 10 may generate the jaw movement-related data of the subject based on the moving image data and the three-dimensional data and distribute the generated jaw movement-related data of the subject so that the user or the subject can view or save the simulation moving image of the jaw movement that can be generated based on the jaw movement-related data.

Data generation system 1 and data generation apparatus 10 according to each of the embodiments or examples described above may include the configurations and functions of the other embodiments alone or in combination.

It should be understood that the embodiments disclosed herein are not restrictive but illustrative in all aspects. The scope of the present disclosure is defined by the appended claims rather than the foregoing description. The configurations illustrated in the embodiments and the configurations illustrated in the modifications may be combined as appropriate.

## Claims

1. A data generation apparatus (10) configured to generate jaw movement-related data related to a jaw movement of a subject, the data generation apparatus comprising:
an input unit (13, 14) to which moving image data obtained by photographing the subject making a jaw movement with a partial teeth row of an upper and/or lower teeth row exposed and three-dimensional data of the upper and/or lower teeth row of the subject are input; and
an arithmetic unit (11) configured to generate the jaw movement-related data related to the jaw movement of the subject based on the partial teeth row included in each of a plurality of frame images constituting the moving image data and the three-dimensional data of the upper and/or lower teeth row, wherein
the arithmetic unit is configured to:
extract a teeth row image corresponding to the partial teeth row from each of the plurality of frame images;
search for a rendering image for each one of the plurality of frame images, in which the rendering image includes the partial teeth row in two dimensions corresponding to the teeth row image extracted from the respective frame image, in which the rendering image is selected from a plurality of rendering images including the upper and/or lower teeth row generated based on the three-dimensional data of the upper and/or lower teeth row through pattern matching, wherein the data generation apparatus (10) is further configured to search by performing a first pattern matching step using rendering images generated from viewpoints tilted at first angular intervals in a horizontal direction or a vertical direction, and a second pattern matching step using rendering images generated from viewpoints tilted at second angular intervals smaller than the first angular intervals, based on the rendering image generated in the first pattern matching step; and
generate and output the jaw movement-related data based on the rendering image corresponding to the teeth row image from each of the plurality of frame images.

2. The data generation apparatus according to claim 1, wherein the three-dimensional data input to the input unit includes at least one of three-dimensional data including positional information of each of grouped points showing a surface of the upper and/or lower teeth row and three-dimensional data obtained by taking a computed tomographic image of the upper and/or lower teeth row.

3. The data generation apparatus according to claim 1, wherein the arithmetic unit displays, on a display unit (40), a result of dynamically simulating the jaw movement of the subject using only the three-dimensional data in accordance with each of the plurality of frame images based on the jaw movement-related data.

4. The data generation apparatus according to claim 1, wherein the moving image data is obtained by a camera (20) disposed at any one of positions substantially forward of the subject, substantially diagonally forward of the subject, and substantially sideward of the subject or a plurality of cameras (20) disposed at any two or more of positions substantially forward of the subject, substantially diagonally forward of the subject, and substantially sideward of the subject.

5. The data generation apparatus according to claim 1, wherein the moving image data includes moving image data obtained by photographing using at least one of a monocular camera, a stereo camera, and a depth camera.

6. The data generation apparatus according to claim 1, wherein the arithmetic unit generates the jaw movement-related data following input of the moving image data to the input unit during photographing of the subject.

7. The data generation apparatus according to claim 1, wherein, based on input data including a shape of the partial teeth row included in a frame image constituting the moving image data and the three-dimensional data of the upper or lower teeth row, the arithmetic unit estimates the two-dimensional rendering images corresponding to the partial teeth row using an estimation model for estimating the two-dimensional rendering image corresponding to the partial teeth row included in the frame image based on the input data.

8. The data generation apparatus according to claim 1, wherein, based on input data including a frame image constituting the moving image data, the arithmetic unit estimates an area of the partial teeth row in the frame image using an estimation model (130) for estimating the area of the partial teeth row in the frame image based on the input data.

9. The data generation apparatus according to claim 1, wherein, based on input data including a shape of the partial teeth row included in a frame image constituting the moving image data and the three-dimensional data of the upper or lower teeth row, the arithmetic unit estimates three-dimensional data of the upper or lower teeth row using an estimation model (130) for estimating the three-dimensional data of the upper or lower teeth row corresponding to the partial teeth row included in the frame image based on the input data.

10. A data generation method for generating jaw movement-related data related to a jaw movement of a subject by a computer (11), the data generation method comprising:
as a process executed by the computer,
inputting moving image data obtained by photographing the subject making a jaw movement with a partial teeth row of an upper and/or lower teeth row exposed and three-dimensional data of the upper and/or lower teeth row of the subject; and
generating the jaw movement-related data related to the jaw movement of the subject based on the partial teeth row included in each of a plurality of frame images constituting the moving image data and the three-dimensional data of the upper and/or lower teeth row, wherein
the generating includes:
extracting a teeth row image corresponding to the partial teeth row from each of the plurality of frame images;
searching for a rendering image for each one of the plurality of frame images, in which the rendering image includes the partial teeth row in two dimensions corresponding to the teeth row image extracted from the respective frame image, in which the rendering image is selected from a plurality of rendering images including the upper and/or lower teeth row generated based on the three-dimensional data of the upper and/or lower teeth row through pattern matching, wherein the searching step further comprises performing a first pattern matching step using rendering images generated from viewpoints tilted at first angular intervals in a horizontal direction or a vertical direction, and a second pattern matching step using rendering images generated from viewpoints tilted at second angular intervals smaller than the first angular intervals, based on the rendering image generated in the first pattern matching step; and
generating and outputting the jaw movement-related data based on the rendering image corresponding to the teeth row image extracted from each of the plurality of frame images.

11. A data generation program (100) for generating jaw movement-related data related to a jaw movement of a subject, the data generation program (100) causing a computer (11) to execute:
inputting moving image data obtained by photographing the subject making a jaw movement with a partial teeth row of an upper and/or lower teeth row exposed and three-dimensional data of the upper and/or lower teeth row of the subject; and
generating the jaw movement-related data related to the jaw movement of the subject based on the partial teeth row included in each of a plurality of frame images constituting the moving image data and the three-dimensional data of the upper and/or lower teeth row, wherein
the generating includes:
extracting a teeth row image corresponding to the partial teeth row from each of the plurality of frame images;
searching for a rendering image for each one of the plurality of frame images, in which the rendering image includes the partial teeth row in two dimensions corresponding to the teeth row image extracted from the respective frame image, in which the rendering image is selected from a plurality of rendering images including the upper and/or lower teeth row generated based on the three-dimensional data of the upper and/or lower teeth row through pattern matching, wherein the searching is further configured to performing a first pattern matching step using rendering images generated from viewpoints tilted at first angular intervals in a horizontal direcion or a vertical direction, and a second pattern matching step using rendering images generated from viewpoints tilted at second angular intervals smaller than the first angular intervals, based on the rendering image generated in the first pattern matching step; and
generating and outputting the jaw movement-related data based on the rendering image corresponding to the teeth row image extracted from each of the plurality of frame images.

## Patentansprüche

1. Datenerzeugungsvorrichtung (10), die konfiguriert ist, um kieferbewegungsbezogene Daten zu erzeugen, die sich auf eine Kieferbewegung eines Subjekts beziehen, wobei die Datenerzeugungsvorrichtung aufweist:
eine Eingabeeinheit (13, 14), in die Bewegtbilddaten, die durch Fotografieren des Subjekts erhalten werden, das eine Kieferbewegung mit einer Teilzahnreihe einer oberen und/oder unteren Zahnreihe, die freigelegt ist, ausführt, und dreidimensionale Daten der oberen und/oder unteren Zahnreihe des Subjekts eingegeben werden; und
eine Arithmetikeinheit (11), die konfiguriert ist, um die kieferbewegungsbezogenen Daten zu erzeugen, die sich auf die Kieferbewegung des Subjekts beziehen, basierend auf der Teilzahnreihe, die in jedem einer Vielzahl von Einzelbildern enthalten ist, die die Bewegtbilddaten und die dreidimensionalen Daten der oberen und/oder unteren Zahnreihe bilden, wobei
die Arithmetikeinheit konfiguriert ist, um:
ein Zahnreihenbild, das der Teilzahnreihe entspricht, aus jedem der Vielzahl von Einzelbildern zu extrahieren;
nach einem Rendering-Bild für jedes der Vielzahl von Einzelbildern zu suchen, in dem das Rendering-Bild die Teilzahnreihe in zwei Dimensionen enthält, die dem Zahnreihenbild entsprechen, das aus dem jeweiligen Einzelbild extrahiert wird, in dem das Rendering-Bild aus einer Vielzahl von Rendering-Bildern ausgewählt wird, die die obere und/oder untere Zahnreihe enthalten, die basierend auf den dreidimensionalen Daten der oberen und/oder unteren Zahnreihe durch Musterabgleich erzeugt werden, wobei die Datenerzeugungsvorrichtung (10) ferner konfiguriert ist zu suchen, indem sie einen ersten Musterabgleichschritt unter Verwendung von Rendering-Bildern, die aus Blickwinkeln erzeugt werden, die um erste Winkelintervalle in einer horizontalen Richtung oder einer vertikalen Richtung geneigt sind, und einen zweiten Musterabgleichschritt unter Verwendung von Rendering-Bildern, die aus Blickwinkeln erzeugt werden, die um zweite Winkelintervalle geneigt sind, die kleiner als die ersten Winkelintervalle sind, basierend auf dem Rendering-Bild, das in dem ersten Musterabgleichschritt erzeugt wird, durchführt; und
die kieferbewegungsbezogenen Daten basierend auf dem Rendering-Bild, das dem Zahnreihenbild aus jedem der Vielzahl von Einzelbildern entspricht, zu erzeugen und auszugeben.

2. Datenerzeugungsvorrichtung nach Anspruch 1, wobei die dreidimensionalen Daten, die in die Eingabeeinheit eingegeben werden, mindestens eines von dreidimensionalen Daten, die Positionsinformationen jedes von gruppierten Punkten enthalten, die eine Oberfläche der oberen und/oder unteren Zahnreihe zeigen, und dreidimensionalen Daten, die durch Aufnehmen eines berechneten tomografischen Bildes der oberen und/oder unteren Zahnreihe erhalten werden, enthalten.

3. Datenerzeugungsvorrichtung nach Anspruch 1, wobei die Arithmetikeinheit auf einer Anzeigeeinheit (40) ein Ergebnis eines dynamischen Simulierens der Kieferbewegung des Subjekts unter Verwendung nur der dreidimensionalen Daten gemäß jedem der Vielzahl von Einzelbildern basierend auf den kieferbewegungsbezogenen Daten anzeigt.

4. Datenerzeugungsvorrichtung nach Anspruch 1, wobei die Bewegtbilddaten durch eine Kamera (20), die an einer beliebigen von Positionen im Wesentlichen vor dem Subjekt, im Wesentlichen diagonal vor dem Subjekt und im Wesentlichen seitlich des Subjekts angeordnet ist, oder eine Vielzahl von Kameras (20), die an beliebigen zwei oder mehr von Positionen im Wesentlichen vor dem Subjekt, im Wesentlichen diagonal vor dem Subjekt und im Wesentlichen seitlich des Subjekts angeordnet ist, erhalten werden.

5. Datenerzeugungsvorrichtung nach Anspruch 1, wobei die Bewegtbilddaten Bewegtbilddaten umfassen, die durch Fotografieren unter Verwendung von mindestens einer von einer monokularen Kamera, einer Stereokamera und einer Tiefenkamera erhalten werden.

6. Datenerzeugungsvorrichtung nach Anspruch 1, wobei die Arithmetikeinheit die kieferbewegungsbezogenen Daten nach einer Eingabe der Bewegtbilddaten in die Eingabeeinheit während des Fotografierens des Subjekts erzeugt.

7. Datenerzeugungsvorrichtung nach Anspruch 1, wobei basierend auf Eingabedaten, die eine Form der Teilzahnreihe enthalten, die in einem Einzelbild enthalten ist, das die Bewegtbilddaten und die dreidimensionalen Daten der oberen oder unteren Zahnreihe bildet, die Arithmetikeinheit die zweidimensionalen Rendering-Bilder, die der Teilzahnreihe entsprechen, unter Verwendung eines Schätzmodells zum Schätzen des zweidimensionalen Rendering-Bildes, das der Teilzahnreihe entspricht, die in dem Einzelbild enthalten ist, basierend auf den Eingabedaten schätzt.

8. Datenerzeugungsvorrichtung nach Anspruch 1, wobei basierend auf Eingabedaten, die ein Einzelbild enthalten, das die Bewegtbilddaten bildet, die Arithmetikeinheit einen Bereich der Teilzahnreihe in dem Einzelbild unter Verwendung eines Schätzmodells (130) zum Schätzen des Bereichs der Teilzahnreihe in dem Einzelbild basierend auf den Eingabedaten schätzt.

9. Datenerzeugungsvorrichtung nach Anspruch 1, wobei basierend auf Eingabedaten, die eine Form der Teilzahnreihe enthalten, die in einem Einzelbild enthalten ist, das die Bewegtbilddaten und die dreidimensionalen Daten der oberen oder unteren Zahnreihe bildet, die Arithmetikeinheit dreidimensionale Daten der oberen oder unteren Zahnreihe unter Verwendung eines Schätzmodells (130) zum Schätzen der dreidimensionalen Daten der oberen oder unteren Zahnreihe, die der Teilzahnreihe entspricht, die in dem Einzelbild enthalten ist, basierend auf den Eingabedaten schätzt.

10. Datenerzeugungsverfahren zum Erzeugen kieferbewegungsbezogener Daten, die sich auf eine Kieferbewegung eines Subjekts beziehen, durch einen Computer (11), wobei das Datenerzeugungsverfahren aufweist:
als einen Prozess, der durch den Computer ausgeführt wird,
Eingeben von Bewegtbilddaten, die durch Fotografieren des Subjekts erhalten werden, das eine Kieferbewegung mit einer Teilzahnreihe einer oberen und/oder unteren Zahnreihe, die freigelegt ist, ausführt, und dreidimensionalen Daten der oberen und/oder unteren Zahnreihe des Subjekts; und
Erzeugen der kieferbewegungsbezogenen Daten, die sich auf die Kieferbewegung des Subjekts beziehen, basierend auf der Teilzahnreihe, die in jedem einer Vielzahl von Einzelbildern enthalten ist, die die Bewegtbilddaten und die dreidimensionalen Daten der oberen und/oder unteren Zahnreihe bilden, wobei
das Erzeugen umfasst:
Extrahieren eines Zahnreihenbilds, das der Teilzahnreihe entspricht, aus jedem der Vielzahl von Einzelbildern;
Suchen nach einem Rendering-Bild für jedes der Vielzahl von Einzelbildern, in dem das Rendering-Bild die Teilzahnreihe in zwei Dimensionen enthält, die dem Zahnreihenbild entsprechen, das aus dem jeweiligen Einzelbild extrahiert wird, in dem das Rendering-Bild aus einer Vielzahl von Rendering-Bildern ausgewählt wird, die die obere und/oder untere Zahnreihe enthalten, die basierend auf den dreidimensionalen Daten der oberen und/oder unteren Zahnreihe durch Musterabgleich erzeugt werden, wobei der Suchschritt ferner aufweist: Durchführen eines ersten Musterabgleichschritts unter Verwendung von Rendering-Bildern, die aus Blickwinkeln erzeugt werden, die um erste Winkelintervalle in einer horizontalen Richtung oder einer vertikalen Richtung geneigt sind, und eines zweiten Musterabgleichschritts unter Verwendung von Rendering-Bildern, die aus Blickwinkeln erzeugt werden, die um zweite Winkelintervalle geneigt sind, die kleiner als die ersten Winkelintervalle sind, basierend auf dem Rendering-Bild, das in dem ersten Musterabgleichschritt erzeugt wird; und
Erzeugen und Ausgeben der kieferbewegungsbezogenen Daten basierend auf dem Rendering-Bild, das dem Zahnreihenbild entspricht, das aus jedem der Vielzahl von Einzelbildern extrahiert wird.

11. Datenerzeugungsprogramm (100) zum Erzeugen von kieferbewegungsbezogenen Daten, die sich auf eine Kieferbewegung eines Subjekts beziehen, wobei das Datenerzeugungsprogramm (100) einen Computer (11) veranlasst, auszuführen:
Eingeben von Bewegtbilddaten, die durch Fotografieren des Subjekts erhalten werden, das eine Kieferbewegung mit einer Teilzahnreihe einer oberen und/oder unteren Zahnreihe, die freigelegt ist, ausführt, und dreidimensionalen Daten der oberen und/oder unteren Zahnreihe des Subjekts; und
Erzeugen der kieferbewegungsbezogenen Daten, die sich auf die Kieferbewegung des Subjekts beziehen, basierend auf der Teilzahnreihe, die in jedem einer Vielzahl von Einzelbildern enthalten ist, die die Bewegtbilddaten und die dreidimensionalen Daten der oberen und/oder unteren Zahnreihe bilden, wobei
das Erzeugen umfasst:
Extrahieren eines Zahnreihenbilds, das der Teilzahnreihe entspricht, aus jedem der Vielzahl von Einzelbildern;
Suchen nach einem Rendering-Bild für jedes der Vielzahl von Einzelbildern, in dem das Rendering-Bild die Teilzahnreihe in zwei Dimensionen enthält, die dem Zahnreihenbild entsprechen, das aus dem jeweiligen Einzelbild extrahiert wird, in dem das Rendering-Bild aus einer Vielzahl von Rendering-Bildern ausgewählt wird, die die obere und/oder untere Zahnreihe enthalten, die basierend auf den dreidimensionalen Daten der oberen und/oder unteren Zahnreihe durch Musterabgleich erzeugt werden, wobei das Suchen ferner konfiguriert ist, um einen ersten Musterabgleichschritt unter Verwendung von Rendering-Bildern, die aus Blickwinkeln erzeugt werden, die um erste Winkelintervalle in einer horizontalen Richtung oder einer vertikalen Richtung geneigt sind, und einen zweiten Musterabgleichschritt unter Verwendung von Rendering-Bildern, die aus Blickwinkeln erzeugt werden, die um zweite Winkelintervalle geneigt sind, die kleiner als die ersten Winkelintervalle sind, basierend auf dem Rendering-Bild, das in dem ersten Musterabgleichschritt erzeugt wird, durchzuführen; und
Erzeugen und Ausgeben der kieferbewegungsbezogenen Daten basierend auf dem Rendering-Bild, das dem Zahnreihenbild entspricht, das aus jedem der Vielzahl von Einzelbildern extrahiert wird.

## Revendications

1. Appareil (10) de génération de données configuré pour générer des données relatives au mouvement de mâchoire associées à un mouvement de la mâchoire d'un sujet, l'appareil de génération de données comprenant :
une unité d'entrée (13, 14) dans laquelle sont entrées des données d'images animées obtenues en photographiant le sujet effectuant un mouvement de mâchoire avec une rangée partielle de dents d'une rangée de dents supérieure et/ou inférieure exposée et des données tridimensionnelles de la rangée de dents supérieure et/ou inférieure du sujet ; et
une unité arithmétique (11) configurée pour générer les données relatives au mouvement de mâchoire associées au mouvement de la mâchoire du sujet sur la base de la rangée partielle de dents incluse dans chacune d'une pluralité d'images de trame constituant les données d'images animées et des données tridimensionnelles de la rangée de dents supérieure et/ou inférieure, dans lequel
l'unité arithmétique est configurée pour :
extraire une image de rangée de dents correspondant à la rangée partielle de dents à partir de chacune de la pluralité d'images de trame ;
rechercher une image de rendu pour chacune de la pluralité d'images de trame, dans lequel l'image de rendu inclut la rangée partielle de dents en deux dimensions correspondant à l'image de rangée de dents extraite à partir de l'image de trame respective, dans lequel l'image de rendu est sélectionnée parmi une pluralité d'images de rendu incluant la rangée de dents supérieure et/ou inférieure générée sur la base des données tridimensionnelles de la rangée de dents supérieure et/ou inférieure par mise en correspondance de motifs, dans lequel l'appareil (10) de génération de données est en outre configuré pour effectuer une recherche en réalisant une première étape de mise en correspondance de motifs à l'aide d'images de rendu générées à partir de points de vue inclinés selon de premiers intervalles angulaires dans une direction horizontale ou une direction verticale, et une seconde étape de mise en correspondance de motifs à l'aide d'images de rendu générées à partir de points de vue inclinés selon des seconds intervalles angulaires inférieurs aux premiers intervalles angulaires, sur la base de l'image de rendu générée dans la première étape de mise en correspondance de motifs ; et
générer et sortir les données relatives au mouvement de mâchoire sur la base de l'image de rendu correspondant à l'image de rangée de dents à partir de chacune de la pluralité d'images de trame.

2. Appareil de génération de données selon la revendication 1, dans lequel les données tridimensionnelles entrées dans l'unité d'entrée comprennent au moins un élément parmi des données tridimensionnelles comprenant des informations de position de chacun de plusieurs points groupés représentant une surface de la rangée de dents supérieure et/ou inférieure et des données tridimensionnelles obtenues en prenant une image tomodensitométrique de la rangée de dents supérieure et/ou inférieure.

3. Appareil de génération de données selon la revendication 1, dans lequel l'unité arithmétique affiche, sur une unité d'affichage (40), un résultat de simulation dynamique du mouvement de la mâchoire du sujet en utilisant uniquement les données tridimensionnelles conformément à chacune de la pluralité d'images de trame sur la base des données relatives au mouvement de mâchoire.

4. Appareil de génération de données selon la revendication 1, dans lequel les données d'images animées sont obtenues par une caméra (20) disposée à l'une quelconque des positions sensiblement en avant du sujet, sensiblement en diagonale en avant du sujet et sensiblement sur le côté du sujet, ou par une pluralité de caméras (20) disposées à deux ou plus de deux positions quelconques parmi des positions sensiblement en avant du sujet, sensiblement en diagonale en avant du sujet et sensiblement sur le côté du sujet.

5. Appareil de génération de données selon la revendication 1, dans lequel les données d'images animées comprennent des données d'images animées obtenues par photographie à l'aide d'au moins l'une parmi une caméra monoculaire, une caméra stéréo et une caméra de profondeur.

6. Appareil de génération de données selon la revendication 1, dans lequel l'unité arithmétique génère les données relatives au mouvement de mâchoire après l'entrée des données d'images animées dans l'unité d'entrée pendant la photographie du sujet.

7. Appareil de génération de données selon la revendication 1, dans lequel, sur la base de données d'entrée comprenant une forme de la rangée partielle de dents incluse dans une image de trame constituant les données d'images animées et des données tridimensionnelles de la rangée de dents supérieure ou inférieure, l'unité arithmétique estime les images bidimensionnelles de rendu correspondant à la rangée partielle de dents à l'aide d'un modèle d'estimation pour estimer l'image bidimensionnelle de rendu correspondant à la rangée partielle de dents incluse dans l'image de trame sur la base des données d'entrée.

8. Appareil de génération de données selon la revendication 1, dans lequel, sur la base de données d'entrée comprenant une image de trame constituant les données d'images animées, l'unité arithmétique estime une zone de la rangée partielle de dents dans l'image de trame à l'aide d'un modèle d'estimation (130) pour estimer la zone de la rangée partielle de dents dans l'image de trame sur la base des données d'entrée.

9. Appareil de génération de données selon la revendication 1, dans lequel, sur la base de données d'entrée comprenant une forme de la rangée partielle de dents incluse dans une image de trame constituant les données d'images animées et des données tridimensionnelles de la rangée de dents supérieure ou inférieure, l'unité arithmétique estime des données tridimensionnelles de la rangée de dents supérieure ou inférieure à l'aide d'un modèle d'estimation (130) pour estimer les données tridimensionnelles de la rangée de dents supérieure ou inférieure correspondant à la rangée partielle de dents incluse dans l'image de trame sur la base des données d'entrée.

10. Procédé de génération de données pour générer des données relatives au mouvement de mâchoire associées à un mouvement de la mâchoire d'un sujet par un ordinateur (11), le procédé de génération de données comprenant :
en tant que traitement exécuté par l'ordinateur,
l'entrée de données d'images animées obtenues en photographiant le sujet effectuant un mouvement de mâchoire avec une rangée partielle de dents d'une rangée de dents supérieure et/ou inférieure exposée et de données tridimensionnelles de la rangée de dents supérieure et/ou inférieure du sujet ; et
la génération des données relatives au mouvement de mâchoire associées au mouvement de la mâchoire du sujet sur la base de la rangée partielle de dents incluse dans chacune d'une pluralité d'images de trame constituant les données d'images animées et des données tridimensionnelles de la rangée de dents supérieure et/ou inférieure, dans lequel
la génération comprend :
l'extraction d'une image de rangée de dents correspondant à la rangée partielle de dents à partir de chacune de la pluralité d'images de trame ;
la recherche d'une image de rendu pour chacune de la pluralité d'images de trame, dans lequel l'image de rendu inclut la rangée partielle de dents en deux dimensions correspondant à l'image de rangée de dents extraite à partir de l'image de trame respective, dans lequel l'image de rendu est sélectionnée parmi une pluralité d'images de rendu incluant la rangée de dents supérieure et/ou inférieure générée sur la base des données tridimensionnelles de la rangée de dents supérieure et/ou inférieure par mise en correspondance de motifs, dans lequel l'étape de recherche comprend en outre la réalisation d'une première étape de mise en correspondance de motifs à l'aide d'images de rendu générées à partir de points de vue inclinés selon de premiers intervalles angulaires dans une direction horizontale ou une direction verticale, et d'une seconde étape de mise en correspondance de motifs à l'aide d'images de rendu générées à partir de points de vue inclinés selon des seconds intervalles angulaires inférieurs aux premiers intervalles angulaires, sur la base de l'image de rendu générée dans la première étape de mise en correspondance de motifs ; et
la génération et la sortie des données relatives au mouvement de mâchoire sur la base de l'image de rendu correspondant à l'image de rangée de dents extraite à partir de chacune de la pluralité d'images de trame.

11. Programme (100) de génération de données pour générer des données relatives au mouvement de mâchoire associées à un mouvement de la mâchoire d'un sujet, le programme (100) de génération de données amenant un ordinateur (11) à exécuter :
l'entrée de données d'images animées obtenues en photographiant le sujet effectuant un mouvement de mâchoire avec une rangée partielle de dents d'une rangée de dents supérieure et/ou inférieure exposée et de données tridimensionnelles de la rangée de dents supérieure et/ou inférieure du sujet ; et
la génération des données relatives au mouvement de mâchoire associées au mouvement de la mâchoire du sujet sur la base de la rangée partielle de dents incluse dans chacune d'une pluralité d'images de trame constituant les données d'images animées et des données tridimensionnelles de la rangée de dents supérieure et/ou inférieure, dans lequel
la génération comprend :
l'extraction d'une image de rangée de dents correspondant à la rangée partielle de dents à partir de chacune de la pluralité d'images de trame ;
la recherche d'une image de rendu pour chacune de la pluralité d'images de trame, dans lequel l'image de rendu inclut la rangée partielle de dents en deux dimensions correspondant à l'image de rangée de dents extraite à partir de l'image de trame respective, dans lequel l'image de rendu est sélectionnée parmi une pluralité d'images de rendu incluant la rangée de dents supérieure et/ou inférieure générée sur la base des données tridimensionnelles de la rangée de dents supérieure et/ou inférieure par mise en correspondance de motifs, dans lequel la recherche est en outre configurée pour effectuer une première étape de mise en correspondance de motifs à l'aide d'images de rendu générées à partir de points de vue inclinés selon de premiers intervalles angulaires dans une direction horizontale ou une direction verticale, et une seconde étape de mise en correspondance de motifs à l'aide d'images de rendu générées à partir de points de vue inclinés selon des seconds intervalles angulaires inférieurs aux premiers intervalles angulaires, sur la base de l'image de rendu générée dans la première étape de mise en correspondance de motifs ; et
la génération et la sortie des données relatives au mouvement de mâchoire sur la base de l'image de rendu correspondant à l'image de rangée de dents extraite à partir de chacune de la pluralité d'images de trame.
